# EUROPEAN PATENT SPECIFICATION

(11) **EP 4 443 121 B1**
(45) Date of publication and mention of the grant of the patent: **15.04.2026**
(21) Application number: 22900326.4
(22) Date of filing: 23.11.2022
(51) Int. Cl.: G01K 1/02, G01K 1/14, G01K 7/02, G01K 7/22, G01K 15/00, B60L 3/00, B60L 53/00, H02J 7/00, H02J 7/04, G01K 1/20, G01K 13/00, B60L 53/16, B60L 53/62

(54) **TEMPERATURE MEASUREMENT CIRCUIT OF A VEHICLE-MOUNTED CHARGING DEVICE OF A NEW ENERGY VEHICLE, A CORRESPONDING TEMPERATURE MEASUREMENT METHOD, COMPUTER DEVICE, AND COMPUTER STORAGE MEDIUM.**
TEMPERATURMESSSCHALTUNG EINER FAHRZEUGMONTIERTEN LADEVORRICHTUNG EINES NEUE ENERGIE-FAHRZEUGS, ENTSPRECHENDES TEMPERATURMESSVERFAHREN, COMPUTERVORRICHTUNG UND COMPUTERSPEICHERMEDIUM.
CIRCUIT DE MESURE DE TEMPÉRATURE D'UN DISPOSITIF DE CHARGE MONTÉ SUR VÉHICULE D'UN VÉHICULE À NOUVEAU ÉNERGIE, PROCÉDÉ DE MESURE DE TEMPÉRATURE, DISPOSITIF INFORMATIQUE ET SUPPORT D'INFORMATIONS.

(30) Priority: 30.11.2021 CN 202111450896
(43) Date of publication of application: 09.10.2024
(73) Proprietor: Changchun Jetty Automotive Technology Co., Ltd., Changchun City, Jilin Province 130000 (CN)
(72) Inventor: WANG, Chao, Changchun City, Jilin 130000 (CN)
(74) Representative: Habermann, Hruschka & Schnabel
(86) International application number: PCT/CN2022/133593
(87) International publication number: WO 2023/098521

(56) References cited:
- CN-A- 105 633 498
- CN-A- 107 192 956
- CN-A- 110 907 056
- CN-A- 114 088 217
- CN-U- 201 998 808
- JP-A- 2006 032 572
- JP-A- 2013 005 482
- JP-A- 2020 108 226
- JP-A- H08 308 131
- JP-A- H08 308 131
- JP-A- H11 135 157
- US-A- 5 548 201
- US-A1- 2012 084 032
- US-A1- 2013 344 355

## Description

### RELATED APPLICATIONS

The present disclosure claims priority of the Chinese Patent Application with the application number 202111450896X, filed on November 30, 2021, and entitled "NEW ENERGY VEHICLE, VEHICLE-MOUNTED CHARGING DEVICE, TEMPERATURE MEASUREMENT CIRCUIT, AND TEMPERATURE MEASUREMENT METHOD".

### TECHNICAL FIELD

The present disclosure relates to the technical field of a temperature measurement circuit of a vehicle-mounted charging device of a new energy vehicle, a corresponding temperature measurement method, a computer device, and a computer storage medium.

### BACKGROUND

At present, a new energy electric automobile has become a development trend in the global transportation industry. The charging trend of the new energy electric automobile also increasingly tends to high-power DC fast charging. With the rapid popularization of high-power DC fast charging, a problem that part of electric energy generated is converted into thermal energy emitted to the outside is brought by high-power electric energy transmission is following. This part of the thermal energy is harmful to both of a new energy charging system and a new energy electric vehicle, and if it is not well controlled, fire safety hazards such as being on fire in charging and the like may easily occur, so it is necessary to monitor the charging temperature of the vehicle-mounted charging device of the new energy vehicle. However, the scheme of monitoring the charging temperature of the vehicle-mounted charging device of the existing new energy vehicle is prone to a problem of inaccurate temperature detection.

The temperature measurement circuit and temperature measurement method of new energy electric automobile are known in the prior art, e.g. from JP2020108226A and

### SUMMARY

It is an object of the embodiments of the present disclosure to provide a temperature measurement circuit of a vehicle-mounted charging device of a new energy vehicle, a corresponding temperature measurement method, a computer device, and a computer storage medium. so as to improve the accuracy of measuring the charging temperature of the vehicle-mounted charging device of the new energy vehicle.

In order to achieve the above object, the invention provides a temperature measurement circuit of a vehicle-mounted charging device of a new energy vehicle, including:
a first temperature sensor which is configured to be provided at a positive electrode connection terminal of the vehicle-mounted charging device of the new energy vehicle and to acquire a first analog quantity temperature signal of the positive electrode connection terminal;
a second temperature sensor which is configured to be provided at a negative electrode connection terminal of the vehicle-mounted charging device of the new energy vehicle and to acquire a second analog quantity temperature signal of the negative electrode connection terminal;
a third temperature sensor which is configured to be provided in a housing of the vehicle-mounted charging device of the new energy vehicle and to acquire an analog quantity ambient temperature signal of the vehicle-mounted charging device of the new energy vehicle;
an analog-to-digital conversion module which is configured to correspondingly convert the first analog quantity temperature signal, the second analog quantity temperature signal, and the analog quantity ambient temperature signal into a first digital quantity temperature signal, a second digital quantity temperature signal, and a digital quantity ambient temperature signal;
a microcontroller unit which is configured to correct the first digital quantity temperature signal and the second digital quantity temperature signal according to the digital quantity ambient temperature signal,
wherein the correcting the first digital quantity temperature signal and the second digital quantity temperature signal according to the digital quantity ambient temperature signal includes:
   correcting the first digital quantity temperature signal according to the formula *f*(*x*₁)*=x*₁×(1+*τx*₁)/(1+*ax*₁); and correcting the second digital quantity temperature signal according to the formula *f*(*x*₂)=*x*₂×(1+*τx*₂)/(1+*ax*₂);
   where *x*₁ denotes the first digital quantity temperature signal, *x*₂ denotes the second digital quantity temperature signal, *f*(*x*₁) denotes the corrected first digital quantity temperature signal, *f*(*x*₂) denotes the corrected second digital quantity temperature signal, *τ* denotes a time constant, *a* denotes a temperature compensation coefficient, and *a* = (*k*₁ × *z*+*b*₁)×*τ* + (*k*₂ × *z*+*b*₂), *k*₁ and *b*₁ respectively denote slope and intercept of a straight line corresponding to the two temperature points when the temperature rises by one degree from the lower limit temperature of a workable ambient temperature of the vehicle-mounted charging device of the new energy vehicle at a specified current, *k*₂ and *b*₂ respectively denote slope and intercept of a straight line corresponding to the two temperature points when the temperature rises by one degree from the upper limit temperature of a workable ambient temperature of the vehicle-mounted charging device of the new energy vehicle at the specified current, and z denotes a digital quantity ambient temperature signal.

In the temperature measurement circuit in an embodiment of the present disclosure, the analog-to-digital conversion module is integrated into the microcontroller unit.

In the temperature measurement circuit in an embodiment of the present disclosure, the temperature measurement circuit further includes:
a first bias circuit which is provided on a line between the first temperature sensor and the analog-to-digital conversion module, is configured to set a common mode voltage of the first temperature sensor within the specified voltage range of the first temperature sensor and detect whether the first temperature sensor has an open fault;
a second bias circuit which is provided on a line between the second temperature sensor and the analog-to-digital conversion module, is configured to set a common mode voltage of the second temperature sensor within the specified voltage range of the second temperature sensor and detect whether the second temperature sensor has an open fault,
preferably wherein the first bias circuit includes a first weak pull-up resistor and a first weak pull-down resistor;
one end of the first weak pull-up resistor is connected to one end of the first temperature sensor, and the other end of the first weak pull-up resistor is connected to a DC power supply;
one end of the first weak pull-down resistor is connected to the other end of the first temperature sensor, and the other end of the first weak pull-down resistor is grounded; or
the second bias circuit includes a second weak pull-up resistor and a second weak pull-down resistor;
one end of the second weak pull-up resistor is connected to one end of the second temperature sensor, and the other end of the second weak pull-up resistor is connected to a DC power supply;
one end of the second weak pull-down resistor is connected to the other end of the second temperature sensor, and the other end of the second weak pull-down resistor is grounded.

In the temperature measurement circuit in the embodiment of the present disclosure, the temperature measurement circuit further includes:
a first passive filter which is provided on a line between the first bias circuit and the analog-to-digital conversion module, and is configured to suppress aliasing distortion and high-frequency noise in the first analog quantity temperature signal;
a second passive filter which is provided on a line between the second bias circuit and the analog-to-digital conversion module, and is configured to suppress aliasing distortion and high-frequency noise in the second analog quantity temperature signal,
the first passive filter includes a first first-order RC low-pass filter, a second first-order RC low-pass filter and a first differential capacitor;
the first differential capacitor is connected across between an output end of the first first-order RC low-pass filter and an output end of the second first-order RC low-pass filter; an input end of the first first-order RC low-pass filter and an input end of the second first-order RC low-pass filter are connected to an output end of the first bias circuit,
the second passive filter includes a third first-order RC low-pass filter, a fourth first-order RC low-pass filter and a second differential capacitor;
the second differential capacitor is connected across between an output end of the third first-order RC low-pass filter and an output end of the fourth first-order RC low-pass filter; an input end of the third first-order RC low-pass filter and an input end of the fourth first-order RC low-pass filter are connected to an output end of the second bias circuit.

In the temperature measurement circuit in an embodiment of the present disclosure, the temperature measurement circuit further includes:
a first electromagnetic interference filter which is provided on a line between the first bias circuit and the first temperature sensor, and is configured to filter electromagnetic interference in the first analog quantity temperature signal;
a second electromagnetic interference filter which is provided on a line between the second bias circuit and the second temperature sensor, and is configured to filter electromagnetic interference in the second analog quantity temperature signal,
the first electromagnetic interference filter includes a first *π* filter, a first magnetic bead, a second *π* filter and a second magnetic bead;
the first *π* filter and the second *π* filter are used to filter the electromagnetic interference at and above the cut-off frequency in the first analog quantity temperature signal;
the first magnetic bead and the second magnetic bead are used to filter the electromagnetic interference below the cut-off frequency in the first analog quantity temperature signal;
an input end of the first *π* filter is connected to one end of the first temperature sensor, an output end of the first *π* filter is connected to one end of the first magnetic bead, and the other end of the first magnetic bead is connected to an input end of the first bias circuit;
an input end of the second *π* filter is connected to the other end of the first temperature sensor, an output end of the second *π* filter is connected to one end of the second magnetic bead, and the other end of the second magnetic bead is connected to the input end of the first bias circuit,
the second electromagnetic interference filter includes a third *π* filter, a third magnetic bead, a fourth *π* filter and a fourth magnetic bead;
the third *π* filter and the fourth *π* filter are used to filter the electromagnetic interference at and above the cut-off frequency in the second analog quantity temperature signal;
the third magnetic bead and the fourth magnetic bead are used to filter the electromagnetic interference below the cut-off frequency in the second analog quantity temperature signal;
an input end of the third *π* filter is connected to one end of the second temperature sensor, an output end of the third *π* filter is connected to one end of the third magnetic bead, and the other end of the third magnetic bead is connected to an input end of the second bias circuit;
an input end of the fourth *π* filter is connected to the other end of the second temperature sensor, an output end of the fourth *π* filter is connected to one end of the fourth magnetic bead, and the other end of the fourth magnetic bead is connected to the input end of the second bias circuit.

In the temperature measurement circuit in the embodiment of the present disclosure, one end of the third temperature sensor is connected to a DC power supply through a pull-up resistor, and a connection point between the third temperature sensor and the pull-up resistor serves as an output end of the third temperature sensor, and the other end of the third temperature sensor is grounded.

In the temperature measurement circuit in an embodiment of the present disclosure, the temperature measurement circuit further includes:
a matching network which is provided on a line between the analog-to-digital conversion module and the microcontroller unit and is configured to perform current limiting control and impedance matching control of the first digital quantity temperature signal and the second digital quantity temperature signal; wherein the current limiting control is configured to make current values of the first digital quantity temperature signal and the second digital quantity temperature signal within an allowable range of the microcontroller unit, and the impedance matching control is configured to completely transmit the first digital quantity temperature signal and the second digital quantity temperature signal to the microcontroller unit.

In the temperature measurement circuit in an embodiment of the present disclosure, the first temperature sensor, the second temperature sensor or the third temperature sensor is a thermocouple or a thermal resistor,
preferably, wherein the thermal resistor includes an NTC thermistor or a PTC thermistor.

In another aspect, the embodiment of the present disclosure further provides a vehicle-mounted charging device of a new energy vehicle, which is configured with the temperature measurement circuit described above.

In the vehicle-mounted charging device of the new energy vehicle in the embodiment of the present disclosure, the vehicle-mounted charging device of the new energy vehicle includes a new energy vehicle-mounted charging socket.

In another aspect, the embodiment of the present disclosure further provides a new energy vehicle, which is configured with the vehicle-mounted charging device of the new energy vehicle described above.

The invention further provides a temperature measurement method of a vehicle-mounted charging device of a new energy vehicle, including:
acquiring a first analog quantity temperature signal of a positive electrode connection terminal, a second analog quantity temperature signal of a negative electrode connection terminal, and an analog quantity ambient temperature signal of the vehicle-mounted charging device of the new energy vehicle;
correspondingly converting the first analog quantity temperature signal, the second analog quantity temperature signal, and the analog quantity ambient temperature signal into a first digital quantity temperature signal, a second digital quantity temperature signal, and a digital quantity ambient temperature signal;
correcting the first digital quantity temperature signal and the second digital quantity temperature signal according to the digital quantity ambient temperature signal,
wherein the correcting the first digital quantity temperature signal and the second digital quantity temperature signal according to the digital quantity ambient temperature signal includes:
   correcting the first digital quantity temperature signal according to the formula *f*(*x*₁)*=x*₁×(1*+τx*₁)/(1+*ax*₁); and correcting the second digital quantity temperature signal according to the formula *f*(*x*₂)=*x*₂×(1+*τx*₂)/(1+*ax*₂);
   where *x*₁ denotes the first digital quantity temperature signal, *x*₂ denotes the second digital quantity temperature signal, *f*(*x*₁) denotes the corrected first digital quantity temperature signal, *f*(*x*₂) denotes the corrected second digital quantity temperature signal, *τ* denotes a time constant, *a* denotes a temperature compensation coefficient, and *a =* (*k*₁ × *z*+*b*₁)× *τ +* (*k₂* × *z*+*b*₂), *k*₁ and *b*₁ respectively denote slope and intercept of a straight line corresponding to the two temperature points when the temperature rises by one degree from the lower limit temperature of a workable ambient temperature of the vehicle-mounted charging device of the new energy vehicle at a specified current, *k*₂ and *b*₂ respectively denote slope and intercept of a straight line corresponding to the two temperature points when the temperature rises by one degree from the upper limit temperature of a workable ambient temperature of the vehicle-mounted charging device of the new energy vehicle at the specified current, and z denotes a digital quantity ambient temperature signal.

In another aspect, the embodiment of the present disclosure further provides a computer device including a memory, a processor and a computer program stored in the memory, the computer program, when being run by the processor, executes instructions of the method described above.

In another aspect, the embodiment of the present disclosure further provides a computer storage medium storing a computer program therein, that, when run by the processor of the computer device, executes the instructions of the method described above.

As can be seen from the technical solution provided by the above embodiment of the present disclosure, in the embodiment of the disclosure, the first digital quantity temperature signal at the positive electrode connection terminal can be corrected according to the digital quantity ambient temperature signal, and the second digital quantity temperature signal at the negative electrode connection terminal can be corrected according to the digital quantity ambient temperature signal. In this way, the charging temperature of the positive electrode connection terminal and the charging temperature of the negative electrode connection terminal can be obtained considering the influence of ambient temperature, so that a more accurate charging temperature of the vehicle-mounted charging device of the new energy vehicle can be obtained, which thus is conducive to improving the charging safety and charging efficiency of the vehicle-mounted charging device of the new energy vehicle.

### BRIEF DESCRIPTION OF THE DRAWINGS

To illustrate more clearly the embodiments in the present disclosure or the technical schemes of the prior art, a brief introduction of the accompanying drawings in the embodiments or the description of the prior art will be given below. Obviously, the accompanying drawings described below are only some embodiments described in this disclosure. For those of ordinary skill in the art, other drawings can also be obtained without any creative labor from these drawings. In the drawings:
FIG. 1 shows a structural block diagram of a temperature measurement circuit of a vehicle-mounted charging device of a new energy vehicle in some embodiments of the disclosure;
FIG. 2 shows a schematic circuit diagram of a temperature measurement circuit of a vehicle-mounted charging device of a new energy vehicle in some embodiments of the disclosure;
FIG. 3 shows a structural block diagram of a temperature measurement circuit of a vehicle-mounted charging device of a new energy vehicle in some other embodiments of the disclosure;
FIG. 4 shows a schematic circuit diagram of a temperature measurement circuit of a vehicle-mounted charging device of a new energy vehicle in some other embodiments of the disclosure;
FIG. 5 shows a structural block diagram of a temperature measurement circuit of a vehicle-mounted charging device of a new energy vehicle in some other embodiments of the disclosure;
FIG. 6 shows a schematic circuit diagram of a temperature measurement circuit of a vehicle-mounted charging device of a new energy vehicle in some other embodiments of the disclosure;
FIG. 7 shows a structural block diagram of a temperature measurement circuit of a vehicle-mounted charging device of a new energy vehicle in some other embodiments of the disclosure;
FIG. 8 shows a schematic circuit diagram of a temperature measurement circuit of a vehicle-mounted charging device of a new energy vehicle in some other embodiments of the disclosure;
FIG. 9 shows a structural block diagram of a temperature measurement circuit of a vehicle-mounted charging device of a new energy vehicle in some other embodiments of the disclosure;
FIG. 10 shows a schematic circuit diagram of a temperature measurement circuit of a vehicle-mounted charging device of a new energy vehicle in some other embodiments of the disclosure;
FIG. 11 shows a flow chart of a temperature measurement method of a vehicle-mounted charging device of a new energy vehicle in some embodiments of the disclosure;
FIG. 12 is a structural block diagram of a computer device in some embodiments of the disclosure.

### Description of the reference numerals:

TH1: first temperature sensor;
TH2: second temperature sensor;
TH3: third temperature sensor;
10: analog-to-digital conversion module;
20: microcontroller unit;
31: first bias circuit;
32: second bias circuit;
41: first passive filter;
42: second passive filter;
51: first electromagnetic interference filter;
51a: first *π* filter;
51b: second *π* filter;
52: second electromagnetic interference filter;
52a: third *π* filter;
52b: fourth *π* filter;
60: matching network;
U1: A/D chip;
1202: computer device;
1204: processor;
1206: memory;
1208: driving mechanism;
1210: input/output interface;
1212: input device;
1214: output device;
1216: presentation device;
1218: graphical user interface;
1220: network interface;
1222: communication link;
1224: communication bus.

### DETAILED DESCRIPTION OF EMBODIMENTS

In order to make those skilled in the art better understand the technical schemes in the present disclosure, the technical schemes in the embodiments of the present disclosure will be clearly and completely described in the following with reference to the accompanying drawings in the embodiments of the present application.

In the course of implementing the present application, the inventor of the present application discovers that, in the existing scheme of monitoring the charging temperature of the vehicle-mounted charging device of the new energy vehicle (such as a new energy vehicle-mounted charging socket), generally only one temperature sensor is provided to detect the vehicle-mounted charging device of the new energy vehicle. However, in many scenarios, there may be a case where the positive electrode connection terminal and the negative electrode connection terminal of the vehicle-mounted charging device of the new energy vehicle may possibly have different temperatures, and in addition, the charging temperature of the vehicle-mounted charging device of the new energy vehicle may also be affected by the external ambient temperature. In view of this, in order to improve the accuracy of measuring the charging temperature of the vehicle-mounted charging device of the new energy vehicle, embodiments of the present invention provide an improved temperature measurement circuit of the vehicle-mounted charging device of the new energy vehicle.

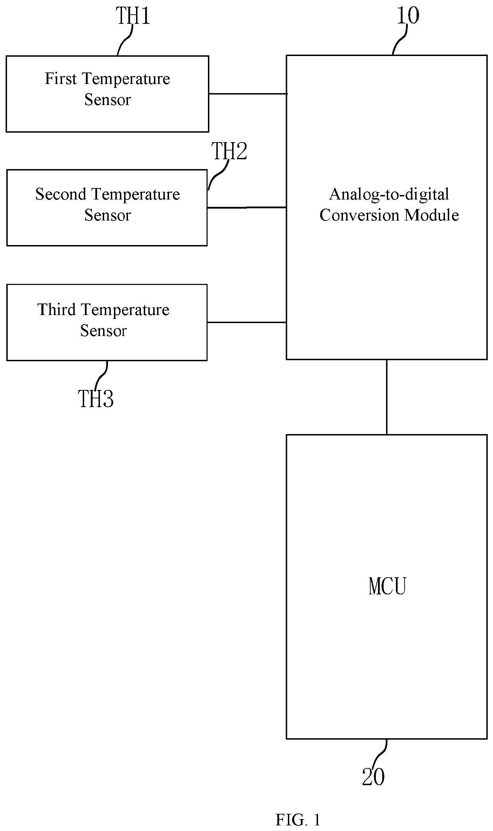

As shown in FIG. 1, in some embodiments, the temperature measurement circuit of the vehicle-mounted charging device of the new energy vehicle may include: a first temperature sensor TH1, a second temperature sensor TH2, a third temperature sensor TH3, an analogue-to-digital conversion (A/D) module 10 and a microcontroller unit (MCU) 20.

The first temperature sensor TH1 is provided at a positive electrode connection terminal of the vehicle-mounted charging device of the new energy vehicle and is configured to acquire a first analog quantity temperature signal of the positive electrode connection terminal; the second temperature sensor TH2 is provided at a negative electrode connection terminal of the vehicle-mounted charging device of the new energy vehicle and is configured to acquire a second analog quantity temperature signal of the negative electrode connection terminal; the third temperature sensor TH3 is provided in a housing of the vehicle-mounted charging device of the new energy vehicle and can be far away from the position of a heating component, and is configured to acquire an analog quantity ambient temperature signal of the vehicle-mounted charging device of the new energy vehicle.

In view of in many scenarios, there may be a case where the positive electrode connection terminal and the negative electrode connection terminal of the vehicle-mounted charging device of the new energy vehicle may possibly have different temperatures, by providing temperature sensors respectively at the positive electrode connection terminal and the negative electrode connection terminal, the charging temperatures of the positive electrode connection terminal and the negative electrode connection terminal can be obtained correspondingly, which thus is conducive to obtaining a more accurate charging temperature of the vehicle-mounted charging device of the new energy vehicle. By providing the third temperature sensor TH3 in the housing of the vehicle-mounted charging device of the new energy vehicle and can be far away from the position of a heating component, which thus is conducive to obtaining more accurate ambient temperature. It should be noted that the ambient temperature here refers to the ambient temperature of the positive electrode connection terminal and the negative electrode connection terminal. In the embodiment of the present disclosure, the heating component is any component that may affect the positive electrode connection terminal and the negative electrode connection terminal. For example, in an exemplary embodiment, the heating component may include, for example, a microcontroller unit 20 of a temperature measurement circuit, etc.

In some embodiments, the above measures for locating the third temperature sensor TH3 away from the heating component may include:
1) isolating heat conduction of the heating component.
   For example, within the specified radius (for example, 1cm) centered on the third temperature sensor: no components are placed on the front and back of the printed circuit board (that is, the PCB board), the PCB board is not covered with copper (two-layer or multi-layer boards), and/or PCB layout of the signal cable connected by the sensor including line width and line resistance are designed as recommended by the sensor manufacturer.
2) isolating heat radiation of the heating component.
   Although the third temperature sensor can be positioned as far away from the heating component as possible, due to limitation of practical conditions (such as the size of the vehicle-mounted charging device, etc.), the isolation distance may not achieve the desired effect. In this case, thermal insulation materials such as thermal insulation cotton or thermal insulation board and the like can be added as needed to avoid interference by the thermal radiation of the heating component.
3) placing at the position closer to the ambient temperature.

For example, the third temperature sensor can be placed in a position where the external air flow of the printed circuit board is better (for example, the position near an external low-voltage signal connector on the printed circuit board and the like can be selected.

In some embodiments, the first temperature sensor TH1, the second temperature sensor TH2, and the third temperature sensor TH3 may be any suitable temperature sensor. For example, in an embodiment, the first temperature sensor TH1, the second temperature sensor TH2, and the third temperature sensor TH3 may also be a negative temperature coefficient (NTC) thermistor. In another embodiment, the first temperature sensor TH1, the second temperature sensor TH2, and the third temperature sensor TH3 may be a positive temperature coefficient (PTC) thermistor. In another embodiment, the first temperature sensor TH1, the second temperature sensor TH2, and the third temperature sensor TH3 may also be a thermocouple or an armored thermocouple and the like.

The analog-to-digital conversion module 10 is generally a multi-channel analog-to-digital conversion module, that is, it is capable to convert multiple analog signals into corresponding digital signals at the same time. The first temperature sensor TH1, the second temperature sensor TH2 and the third temperature sensor TH3 all output analog signals, and the microcontroller unit 20 can generally only recognize digital signals, therefore, so it is necessary to use the analog-to-digital conversion module 10 to convert the first analog quantity temperature signal into the first digital quantity temperature signal and to covert the second analog quantity temperature signal into the second digital quantity temperature signal correspondingly. In some embodiments, the microcontroller unit 20 itself may have a certain analog-to-digital conversion capability (for example, the microcontroller unit 20 has an analog-to-digital conversion circuit integrated therein), therefore, the analog quantity ambient temperature signal output by the third temperature sensor TH3 can be directly input to the analog-to-digital conversion circuit inside the microcontroller unit 20 for analog-to-digital conversion, so that the digital quantity ambient temperature signal can be obtained.

Of course, in other embodiments, the microcontroller unit 20 may also be selected as a microcontroller unit 20 without capability of analog-to-digital conversion. In this case, the analog-to-digital conversion module 10 should be capable to convert at least three analog signals into the corresponding digital signals at the same time, so that the first analog quantity temperature signal, the second analog quantity temperature signal and the analog quantity ambient temperature signal can be converted into the corresponding digital signals. In some other embodiments, the microcontroller unit 20 may also be selected as a microcontroller unit 20 with multi-channel analog-to-digital conversion capability, so that the first analog quantity temperature signal, the second analog quantity temperature signal and the analog quantity ambient temperature signal can be directly converted to the corresponding digital signals by utilizing the microcontroller unit 20. In this way, the analog-to-digital conversion module 10 is saved.

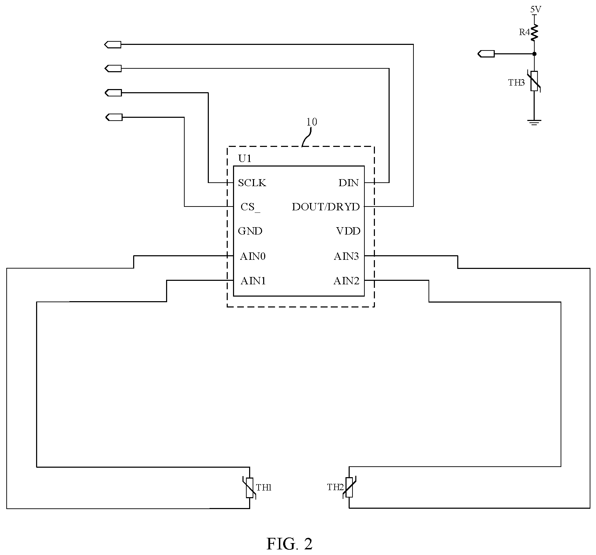

Combined with FIG. 2 shows, in some embodiments, the analog-digital conversion module 10 can be an integrated A/D chip U1. In the A/D chip U1, AIN0 to AIN3 are input pins for temperature analog quantity signals, DIN and DOUT/DRDY are output pins for temperature digital quantity signals, CS_ is an input pin for a chip selection signal, SCLK is an input pin for a clock signal, GND is a ground pin, VDD is a power pin (for example, 5V DC power supply can be connected externally). In which AIN0 to AIN1 are respectively connected to both ends of the first temperature sensor TH1, and AIN2 to AIN3 are respectively connected to both ends of the second temperature sensor TH2. DIN and DOUT/DRDY are respectively connected to the microcontroller unit 20 to output two channels of temperature digital quantity signals to the microcontroller unit 20. In addition, the CS_pin and the SCLK pin of the A/D chip U1 are respectively connected to the microcontroller unit 20 to realize the control of the analog-to-digital conversion module 10. In some embodiments, the output of the A/D chip U1 can adopt a serial peripheral interface (SPI) communication mode, and can be cascaded to multiple groups to facilitate the use of multiple temperature measurement points.

Further combined with FIG. 2 shows, one end of the third temperature sensor TH3 is connected to a DC power supply (e.g. 5V DC power supply) through a pull-up resistor R4, and a connection point between the third temperature sensor TH3 and the pull-up resistor R4 serves as an output end of the third temperature sensor TH3, and the other end of the third temperature sensor TH3 is grounded.

The microcontroller unit 20 can also be called a single-chip microcomputer, which is the control and processing center of the vehicle-mounted charging device of the new energy vehicle. In some embodiments, the microcontroller unit 20 can also be replaced by other control and processing chips such as a micro processor unit (MPU) and the like.

In the embodiment of the present disclosure, correcting the first digital quantity temperature signal and the second digital quantity temperature signal according to the digital quantity ambient temperature signal refers to correcting the first digital quantity temperature signal according to the digital quantity ambient temperature signal and correcting the second digital quantity temperature signal according to the digital quantity ambient temperature signal. In this way, the charging temperature of the positive electrode connection terminal and the charging temperature of the negative electrode connection terminal can be obtained considering the influence of ambient temperature, so that a more accurate charging temperature of the vehicle-mounted charging device of the new energy vehicle can be obtained.

Further, when either the positive electrode connection terminal charging temperature or the negative electrode connection terminal charging temperature reaches or exceeds the set temperature, the microcontroller unit 20 can accordingly perform safety control in time, so as to improve the charging safety and charging efficiency of the vehicle-mounted charging device of the new energy vehicle. Specifically, in the existing technology, if the acquired charging temperature is lower than the actual charging temperature, it is easy to cause high temperature of the vehicle-mounted charging device of the new energy vehicle; if the acquired charging temperature is higher than the actual charging temperature, it is easy to lead to the misoperation (for example, cutting off the charging circuit) of the vehicle-mounted charging device of the new energy vehicle, which will affect the charging efficiency. In the embodiment of the present disclosure, the temperature measurement circuit of the vehicle-mounted charging device of the new energy vehicle measures a more accurate charging temperature, thereby avoiding the misoperation or high temperature problem of the new energy vehicle-mounted charging socket caused by inaccurate charging temperature measurement in the prior art with a high probability, and thus improving the charging safety and charging efficiency of the vehicle-mounted charging device of the new energy vehicle.

According to the invention, the correcting the first digital quantity temperature signal and the second digital quantity temperature signal according to the digital quantity ambient temperature signal, includes:
correcting the first digital quantity temperature signal according to the formula *f*(*x*₁)=*x*₁×(1+*τx*₁)/(1+*ax*₁); and correcting the second digital quantity temperature signal according to the formula *f*(*x*₂)*=x*₂×(1+*τx*₂)/(1+*ax*₂). where *x*₁ denotes the first digital quantity temperature signal, *x*₂ denotes the second digital quantity temperature signal, *f*(*x*₁) denotes the corrected first digital quantity temperature signal, *f*(*x*₂) denotes the corrected second digital quantity temperature signal, *τ* denotes a time constant, *a* denotes a temperature compensation coefficient, and *a* = (*k*₁ × *z*+*b*₁) × *τ +* (*k*₂ × *z*+*b*₂), *k*₁ and *b*₁ respectively denote slope and intercept of a straight line corresponding to the two temperature points when the temperature rises by one degree from the lower limit temperature at the specified current, *k*₂ and *b*₂ respectively denote slope and intercept of a straight line corresponding to the two temperature points when the temperature rises by one degree from the upper limit temperature at the specified current.

The specified current can be 500A, 300A, etc., which can be selected according to actual needs. The lower limit temperature and the upper limit temperature are both ambient temperatures, which can be determined according to the workable ambient temperature of the vehicle-mounted charging device of the new energy vehicle when implemented. For example, in an exemplary embodiment, the lower limit temperature may be -40 °C and the upper limit temperature may be 80 °C. When the connection terminal is heated from -40 °C to -39 °C at the specified current, a straight line can be determined through the temperature point -40 °C and the temperature point -39 °C in the coordinate system of temperature change with time, and *k*₁ and *b*₁ can be obtained based on the straight line. By the same token, when the connection terminal is heated from 80°C to 81°C at the specified current, a straight line can be determined through the temperature point 80°C and the temperature point 81°C in the coordinate system of temperature change with time, and *k*₂ and *b*₂ can be obtained based on the straight line. In short, there is a linear correspondence between the temperature compensation coefficient *a* and the digital quantity ambient temperature signal *z*, and this correspondence can be stored in the form of a relationship curve. When correcting the first digital quantity temperature signal and the second digital quantity temperature signal according to the formula *f*(*x*)=*x*×(1+*τx*)/(1+*ax*), the corresponding temperature compensation coefficient *a* can be determined from the relationship curve through the actually measured ambient temperature.

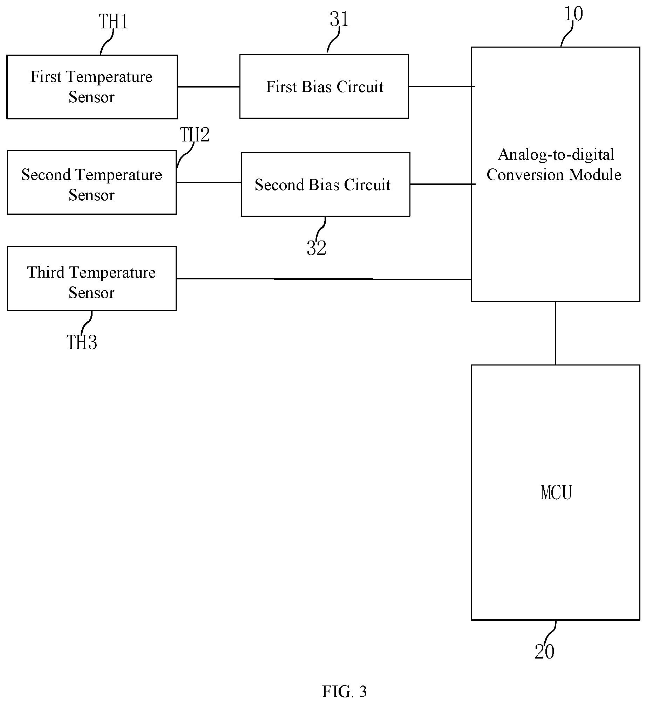

As shown in FIG. 3, in some embodiments, in addition to the first temperature sensor TH1, the second temperature sensor TH2, the third temperature sensor TH3, the analog-to-digital conversion module 10 and the microcontroller unit 20, the temperature measurement circuit of the vehicle-mounted charging device of the new energy vehicle may further include a first bias circuit 31 and a second bias circuit 32.

The first bias circuit 31 can be provided on a line between the first temperature sensor TH1 and the analog-to-digital conversion module 10, which is configured to set a common mode voltage of the first temperature sensor TH1 within the specified voltage range of the first temperature sensor TH1 and detect whether the first temperature sensor TH1 has an open fault. The second bias circuit 32 can be provided on a line between the second temperature sensor TH2 and the analog-to-digital conversion module 10, which is configured to set a common mode voltage of the second temperature sensor TH2 within the specified voltage range of the second temperature sensor TH2 and detect whether the second temperature sensor TH2 has an open fault. That is, when the analog-to-digital conversion module 10 obtains a signal value that exceeds the specified voltage range of the first temperature sensor TH1, it can be recognized accordingly that the first temperature sensor TH1 has an open fault; when the analog-to-digital conversion module 10 obtains a signal value that exceeds the specified voltage range of the second temperature sensor TH2, it can be recognized accordingly that the second temperature sensor TH2 has an open fault, thus realizing the function of detection of the open fault. The specified voltage range described above can be determined according to the actually used performance parameters of the temperature sensor.

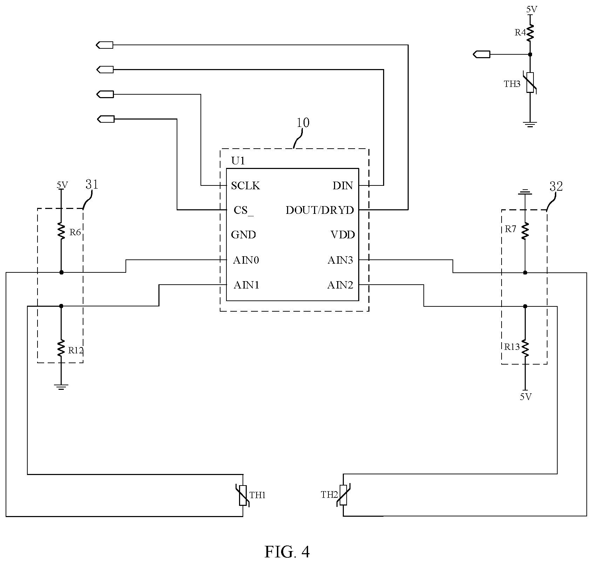

Combined with FIG. 4 shows, in some embodiments, the first bias circuit 31 may include a first weak pull-up resistor R6 and a first weak pull-down resistor R12. One end of the first weak pull-up resistor R6 is connected to one end of the first temperature sensor TH1, and the other end of the first weak pull-up resistor R6 is connected to a DC power supply (e.g. 5V DC power supply, etc.). One end of the first weak pull-down resistor R12 is connected to the other end of the first temperature sensor TH1, and the other end of the first weak pull-down resistor R12 is grounded. The detection mode of the analog-to-digital conversion module 10 is a differential mode detection mode. The first weak pull-up resistor R6 and the first weak pull-down resistor R12 provide the lead for the analog-to-digital conversion module 10 to detect the open fault of the first temperature sensor TH1. When the first temperature sensor TH1 is disconnected, its positive input is pulled up to VDD (e.g. 5V) and its negative input is pulled down to GND, indicating this fault condition.

Further combined with FIG. 4 shows, in some embodiments, the second bias circuit 32 may include a second weak pull-up resistor R13 and a second weak pull-down resistor R7. One end of the second weak pull-up resistor R13 is connected to one end of the second temperature sensor TH2, and the other end of the second weak pull-up resistor R13 is connected to a DC power supply (e.g. 5V DC power supply, etc.). One end of the second weak pull-down resistor R7 is connected to the other end of the second temperature sensor TH2, and the other end of the second weak pull-down resistor R7 is grounded. The detection mode of the analog-to-digital conversion module 10 is a differential mode detection mode. The second weak pull-up resistor R13 and the second weak pull-down resistor R7 provide the lead for the analog-to-digital conversion module 10 to detect the open fault of the second temperature sensor TH2. When the second temperature sensor TH2 is disconnected, its positive input is pulled up to VDD (e.g. 5V) and its negative input is pulled down to GND, thus indicating this fault condition.

In the embodiment shown in FIG. 4, weak pull-up and weak pull-down both mean that the current flowing through the temperature sensor is low (or even weak), so they are called weak pull-up and weak pull-down. In view of the internal resistance of the temperature sensor, the current flowing through the temperature sensor should not be too high, and excessive current will cause the temperature sensor to heat itself, and the temperature measured by the temperature sensor may be inaccurate at this time, thus it is difficult to better characterize the temperature of the measured points. Therefore, the resistance values of the weak pull-up resistor and weak pull-down resistor described above should be set as large as possible (for example, at a megohm level), so that the current flowing through the temperature sensor is as low as possible, and the influence of its own heating on the measurement result is reduced.

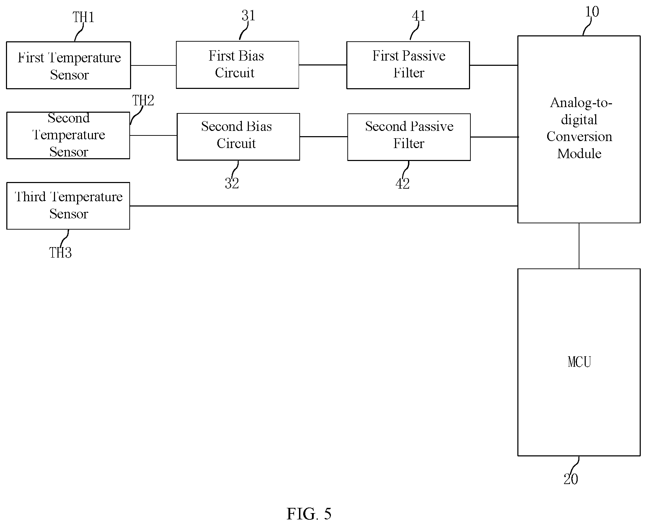

Referring to FIG. 5, in some embodiments, in addition to the first temperature sensor TH1, the second temperature sensor TH2, the third temperature sensor TH3, the analog-to-digital conversion module 10, the microcontroller unit 20, the first bias circuit 31 and the second bias circuit 32, the temperature measurement circuit of the vehicle-mounted charging device of the new energy vehicle may further include a first passive filter 41 and a second passive filter 42. The first passive filter 41 can be provided on a line between the first bias circuit 31 and the analog-to-digital conversion module 10, and is configured to suppress aliasing distortion and high-frequency noise in the first analog quantity temperature signal. The second passive filter 42 can be provided on a line between the second bias circuit 32 and the analog-to-digital conversion module 10, and is configured to suppress aliasing distortion and high-frequency noise in the second analog quantity temperature signal. In an exemplary embodiment, the first passive filter 41 and the second passive filter 42 may both be first-order passive filters to obtain a smoother filtering result.

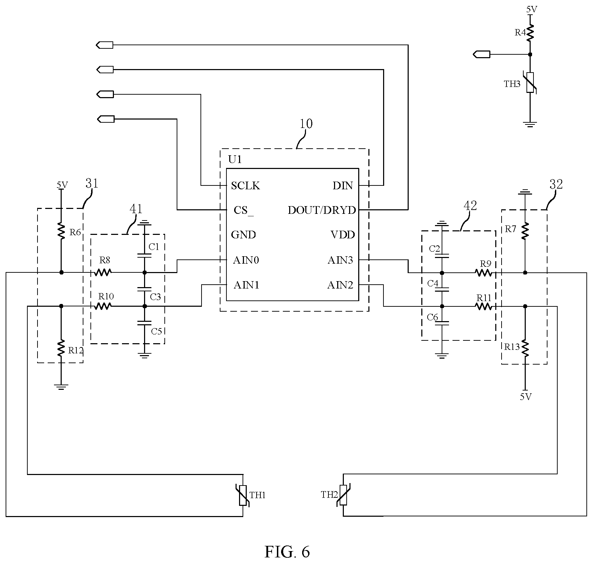

Combined with FIG. 6 shows, in some embodiments, the first passive filter 41 may include a first first-order RC low-pass filter (i.e., the resistor R8 and the capacitor C1 in FIG. 6), a second first-order RC low-pass filter (i.e., the resistor R10 and the capacitor C5 in FIG. 6) and a first differential capacitor C3. The first differential capacitor C3 is connected across between an output end of the first first-order RC low-pass filter and an output end of the second first-order RC low-pass filter, such that the resistor R8, the resistor R10, the capacitor C1, the capacitor C5 and the first differential capacitor C3 can form a differential RC filter to improve the effect of suppressing aliasing distortion and high frequency noise. An input end of the first first-order RC low-pass filter and an input end of the second first-order RC low-pass filter are connected to an output end of the first bias circuit 31.

Further combined with FIG. 6 shows, in some embodiments, the second passive filter 42 includes a third first-order RC low-pass filter (i.e., the resistor R9 and the capacitor C2 in FIG. 6), a fourth first-order RC low-pass filter (i.e., the resistor R11 and the capacitor C6 in FIG. 6) and a second differential capacitor C4. The second differential capacitor C4 is connected across between an output end of the third first-order RC low-pass filter and an output end of the fourth first-order RC low-pass filter, such that the resistor R9, the resistor R11, the capacitor C2, the capacitor C6 and the second differential capacitor C4 can form a differential RC filter to improve the effect of suppressing aliasing distortion and high frequency noise. An input end of the third first-order RC low-pass filter and an input end of the fourth first-order RC low-pass filter are connected to an output end of the second bias circuit 32.

In the embodiment shown in FIG. 6, the capacitor C1, the capacitor C2, the capacitor C5, and the capacitor C6 may have the same capacitance value, have the package of the same specification, and may be at the relatively close position of the placement point on the circuit board. In this way, when the temperature sensor (such as the first temperature sensor TH1, the second temperature sensor TH2) introduces common mode noise, the two signal lines will be mixed with noise in the same direction. When the noise flows through the first passive filter 41 and the second passive filter 42, it will be attenuated or filtered out by the nodes of the capacitor C1, the capacitor C5, the capacitor C2, and the capacitor C6, which also provides a stabilizing anti-interference effect in the temperature measurement process.

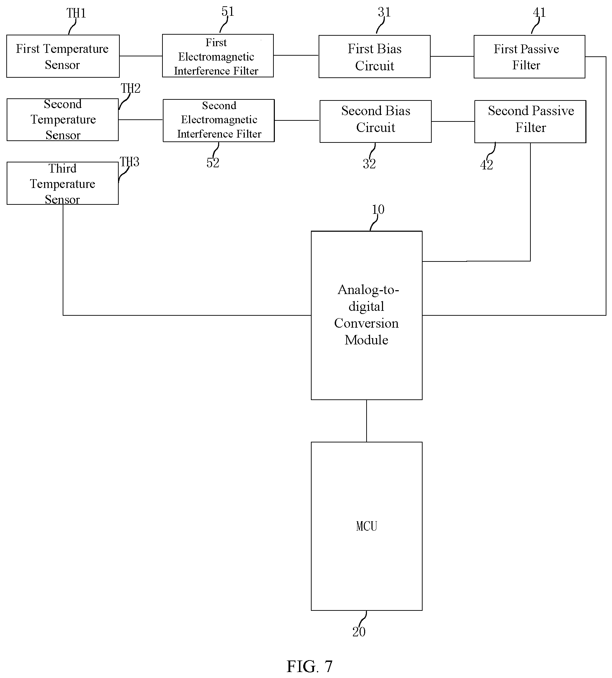

Referring to FIG. 7, in some embodiments, in addition to the first temperature sensor TH1, the second temperature sensor TH2, the third temperature sensor TH3, the analog-to-digital conversion module 10, the microcontroller unit 20, the first bias circuit 31, the second bias circuit 32, the first passive filter 41 and the second passive filter 42, the temperature measurement circuit of the vehicle-mounted charging device of the new energy vehicle may further include a first electromagnetic interference filter 51 and a second electromagnetic interference filter 52. The first electromagnetic interference filter 51 can be provided on a line between the first bias circuit 31 and the first temperature sensor TH1, and is configured to filter electromagnetic interference in the first analog quantity temperature signal. The second electromagnetic interference filter 52 can be provided on a line between the second bias circuit 32 and the second temperature sensor TH2, and is configured to filter electromagnetic interference in the second analog quantity temperature signal.

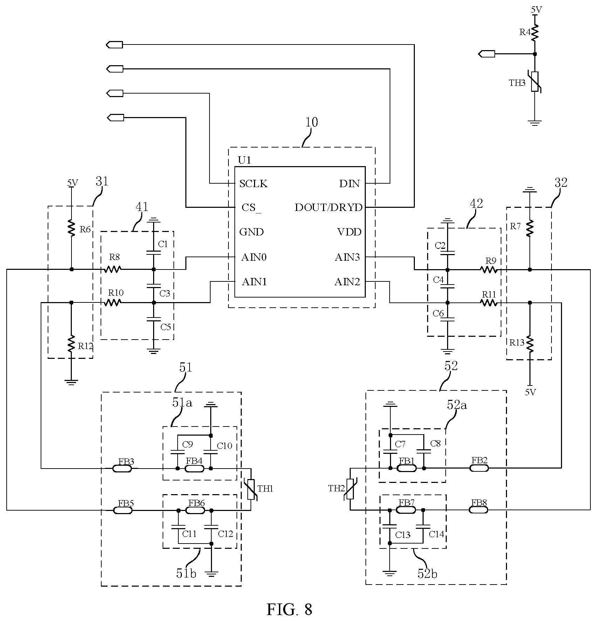

Combined with FIG. 8 shows, in some embodiments, the first electromagnetic interference filter 51 may include a first *π* filter 51a, a first magnetic bead FB3, a second *π* filter 51b and a second magnetic bead FB5. The first *π* filter 51a is composed of a capacitor C9, a capacitor C10 and a magnetic bead FB4. The second *π* filter 51b is composed of a capacitor C11, a capacitor C12 and a magnetic bead FB6. An input end of the first *π* filter 51a is connected to one end of the first temperature sensor TH1, an output end of the first *π* filter 51a is connected to one end of the first magnetic bead FB3, and the other end of the first magnetic bead FB3 is connected to the input end of the first bias circuit 31. An input end of the second *π* filter 51b is connected to the other end of the first temperature sensor TH1, an output end of the second *π* filter 51b is connected to one end of the second magnetic bead FB5, and the other end of the second magnetic bead FB5 is connected to the input end of the first bias circuit 31.

The first *π* filter 51a and the second *π* filter 51b can be used to filter the electromagnetic interference at and above the cut-off frequency in the first analog quantity temperature signal. For example, in an exemplary embodiment, if the cut-off frequencies of the first *π* filter 51a and the second *π* filter 51b are both 50 Hz, then the first *π* filter 51a and the second *π* filter 51b can filter out electromagnetic interference at and above frequencies 50 Hz. The first magnetic bead FB3 and the second magnetic bead FB5 can be used to filter the electromagnetic interference below the cut-off frequency in the first analog quantity temperature signal. For example, in an exemplary embodiment, take that the cut-off frequencies of the first *π* filter 51a and the second *π* filter 51b are both 50 Hz as an example, electromagnetic interference with frequencies below 50 Hz can be filtered out by the first magnetic bead FB3 and the second magnetic bead FB5.

Further referring to FIG. 8, the second electromagnetic interference filter 52 may include a third *π* filter 52a, a third magnetic bead FB2, a fourth *π* filter 52b and a fourth magnetic bead FB8; the third *π* filter 52a is composed of a capacitor C7, a capacitor C8 and a magnetic bead FB1; the fourth *π* filter 52b is composed of a capacitor C13, a capacitor C14 and a magnetic bead FB7. An input end of the third *π* filter 52a is connected to one end of the second temperature sensor TH2, an output end of the third *π* filter 52a is connected to one end of the third magnetic bead FB2, and the other end of the third magnetic bead FB2 is connected to the input end of the second bias circuit 32. An input end of the fourth *π* filter 52b is connected to the other end of the second temperature sensor TH2, an output end of the fourth *π* filter 52b is connected to one end of the fourth magnetic bead FB8, and the other end of the fourth magnetic bead FB8 is connected to the input end of the second bias circuit 32.

The third *π* filter 52a and the fourth *π* filter 52b are used to filter the electromagnetic interference at and above the cut-off frequency in the second analog quantity temperature signal. The third magnetic bead FB2 and the fourth magnetic bead FB8 are used to filter the electromagnetic interference below the cut-off frequency in the second analog quantity temperature signal. In other embodiments, the first magnetic bead FB3, the second magnetic bead FB5, the third magnetic bead FB2, and the fourth magnetic bead FB8 can also be replaced with inductors, depending on actual needs.

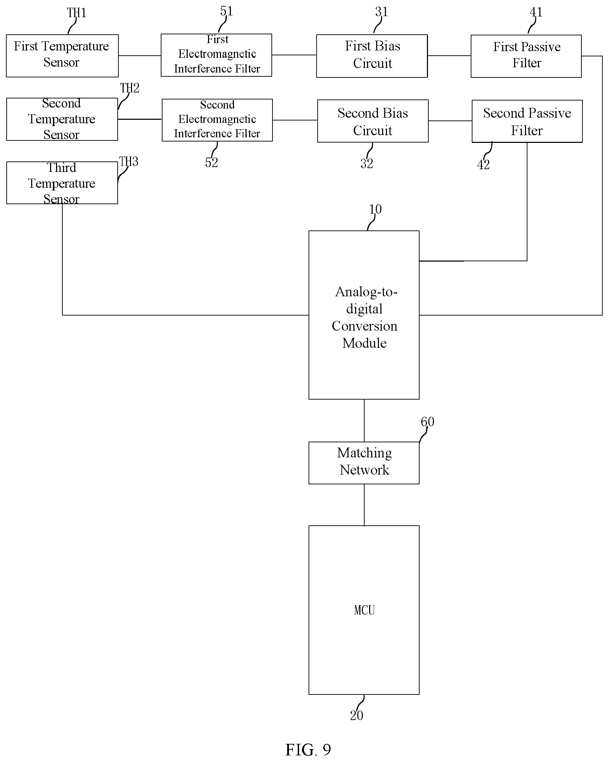

Referring to FIG. 9, in some embodiments, in addition to the first temperature sensor TH1, the second temperature sensor TH2, the third temperature sensor TH3, the analog-to-digital conversion module 10, the microcontroller unit 20, the first bias circuit 31, the second bias circuit 32, the first passive filter 41, the second passive filter 42, the first electromagnetic interference filter 51 and the second electromagnetic interference filter 52, the temperature measurement circuit of the vehicle-mounted charging device of the new energy vehicle may further include a matching network 60. The matching network 60 can be provided on a line between the analog-to-digital conversion module 10 and the microcontroller unit 20 and is configured to perform current limiting control and impedance matching control of the first digital quantity temperature signal and the second digital quantity temperature signal; wherein the current limiting control is configured to make current values of the first digital quantity temperature signal and the second digital quantity temperature signal within an allowable range of the microcontroller unit 20, and the impedance matching control is configured to completely transmit the first digital quantity temperature signal and the second digital quantity temperature signal to the microcontroller unit 20, so as to prevent generating signal reflection waves of the first digital quantity temperature signal and the second digital quantity temperature signal outputted from the analog-to-digital conversion module 10 to the microcontroller unit 20, thereby avoiding the first digital quantity temperature signal and the second digital quantity temperature signal from being incompletely transmitted to the microcontroller unit 20.

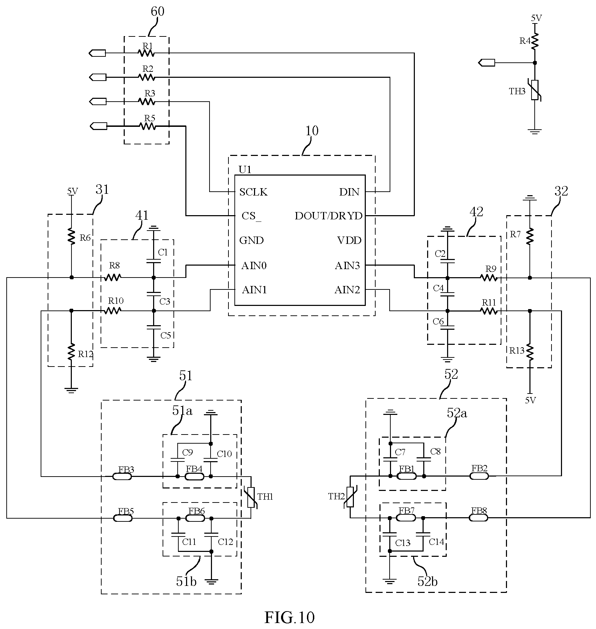

Combined with FIG. 10 shows, in some embodiments, the matching network 60 may include a resistor R1, a resistor R2, a resistor R3, and a resistor R5. In which one end of the resistor R1 is connected to the DOUT/DRDY pin of the A/D chip U1, and the other end of the resistor R1 is connected to the microcontroller unit 20; one end of the resistor R2 is connected to the DIN pin of the A/D chip U1, and the other end of the resistor R2 is connected to the microcontroller unit 20; one end of the resistor R3 is connected to the SCLK pin of the A/D chip U1, and the other end of the resistor R3 is connected to the microcontroller unit 20; one end of the resistor R5 is connected to the CS_ pin of the A/D chip U1, and the other end of the resistor R5 is connected to the microcontroller unit 20.

For the convenience of description, when the above mentioned device is to be described, it is divided into various units based on its functions and described separately. Of course, the functions of each of the various units may be realized in the same one or more software and/or hardware when the present disclosure is implemented.

Correspondingly to the temperature measurement circuit of the vehicle-mounted charging device of the new energy vehicle described above, the embodiment of the present disclosure further provides a vehicle-mounted charging device of a new energy vehicle, which is configured with the temperature measurement circuit described above. In some embodiments, the vehicle-mounted charging device of the new energy vehicle may, for example, include but not be limited to, a new energy vehicle-mounted charging socket, etc.

Correspondingly to the vehicle-mounted charging device of the new energy vehicle described above, the embodiment of the present disclosure further provides a new energy vehicle, which is configured with the vehicle-mounted charging device of the new energy vehicle described above.

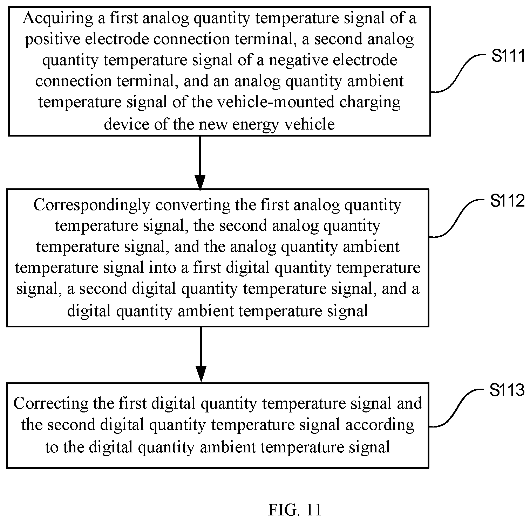

Correspondingly to the temperature measurement circuit of the vehicle-mounted charging device of the new energy vehicle described above, the embodiment of the present disclosure further provides a temperature measurement method of a vehicle-mounted charging device of a new energy vehicle, which can be applied on a side of the temperature measurement circuit of the vehicle-mounted charging device of the new energy vehicle described above, referring to FIG. 11, in some embodiments, the temperature measurement method of the vehicle-mounted charging device of the new energy vehicle may include:

a step S111 of acquiring a first analog quantity temperature signal of a positive electrode connection terminal, a second analog quantity temperature signal of a negative electrode connection terminal, and an analog quantity ambient temperature signal of the vehicle-mounted charging device of the new energy vehicle.

The temperature measurement circuit of the vehicle-mounted charging device of the new energy vehicle can utilize its first temperature sensor, second temperature sensor and third temperature sensor to correspondingly acquire a first analog quantity temperature signal, a second analog quantity temperature signal and an analog quantity ambient temperature signal.

A step S112 of correspondingly converting the first analog quantity temperature signal, the second analog quantity temperature signal, and the analog quantity ambient temperature signal into a first digital quantity temperature signal, a second digital quantity temperature signal, and a digital quantity ambient temperature signal.

The temperature measurement circuit of the vehicle-mounted charging device of the new energy vehicle can utilize its analog-to-digital conversion module to correspondingly convert the first analog quantity temperature signal, the second analog quantity temperature signal, and the analog quantity ambient temperature signal into a first digital quantity temperature signal, a second digital quantity temperature signal, and a digital quantity ambient temperature signal.

A step S113 of correcting the first digital quantity temperature signal and the second digital quantity temperature signal according to the digital quantity ambient temperature signal.

The temperature measurement circuit of the vehicle-mounted charging device of the new energy vehicle can utilize its microcontroller unit to perform the step of correcting the first digital quantity temperature signal and the second digital quantity temperature signal according to the digital quantity ambient temperature signal.

In the temperature measurement method in the embodiment of the present disclosure, correcting the first digital quantity temperature signal and the second digital quantity temperature signal according to the digital quantity ambient temperature signal refers to correcting the first digital quantity temperature signal according to the digital quantity ambient temperature signal and correcting the second digital quantity temperature signal according to the digital quantity ambient temperature signal. In this way, the charging temperature of the positive electrode connection terminal and the charging temperature of the negative electrode connection terminal can be obtained considering the influence of ambient temperature, so that a more accurate charging temperature of the vehicle-mounted charging device of the new energy vehicle can be obtained.

According to the invention, correcting the first digital quantity temperature signal and the second digital quantity temperature signal according to the digital quantity ambient temperature signal includes:
correcting the first digital quantity temperature signal according to the formula *f*(*x*₁)*=x*₁×(1+*τx*₁)/(1+*ax*₁); and correcting the second digital quantity temperature signal according to the formula *f*(*x*₂)*=x*₂×(1+*τx*₂)/(1+*ax*₂). where *x*₁ denotes the first digital quantity temperature signal, *x*₂ denotes the second digital quantity temperature signal, *f*(*x*₁) denotes the corrected first digital quantity temperature signal, *f*(*x*₂) denotes the corrected second digital quantity temperature signal, *τ* denotes a time constant, *a* denotes a temperature compensation coefficient, and *a =* (*k*₁ × *z+b*₁)×*τ* + (*k*₂ × *z+b*₂) *, k*₁ and *b*₁ respectively denote slope and intercept of a straight line corresponding to the two temperature points when the temperature rises by one degree from the lower limit temperature at the specified current, *k*₂ and *b*₂ respectively denote slope and intercept of a straight line corresponding to the two temperature points when the temperature rises by one degree from the upper limit temperature at the specified current.

The temperature measurement method in the embodiment of the disclosure may correct the first digital quantity temperature signal at the positive electrode connection terminal according to the digital quantity ambient temperature signal, and may correct the second digital quantity temperature signal at the negative electrode connection terminal according to the digital quantity ambient temperature signal. In this way, the charging temperature of the positive electrode connection terminal and the charging temperature of the negative electrode connection terminal can be obtained considering the influence of ambient temperature, so that a more accurate charging temperature of the vehicle-mounted charging device of the new energy vehicle can be obtained, which thus is conducive to improving the charging safety and charging efficiency of the vehicle-mounted charging device of the new energy vehicle.

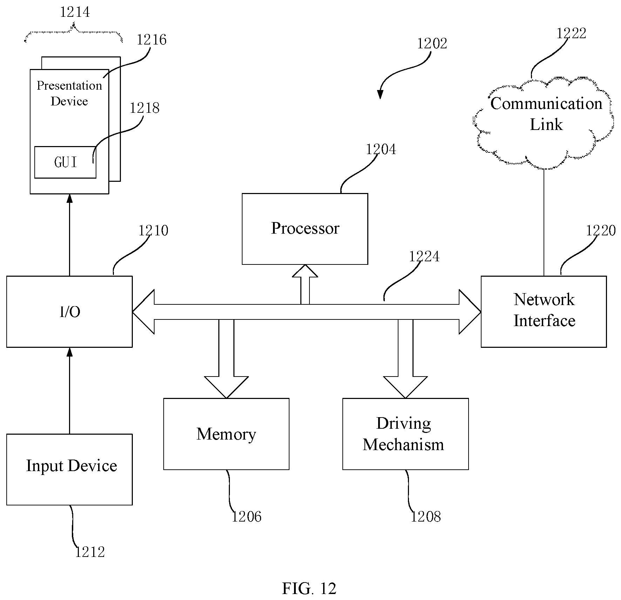

The invention further provides a computer device. As shown in FIG. 12, in some embodiments of this disclosure, the computer device 1202 may include one or more processors 1204, such as one or more central processing units (CPUs) or a graphics processing unit (GPU), each of which may implement one or more hardware threads. The computer device 1202 may also include any memory 1206 for storing any kind of information, such as codes, settings, data, and the like. In a specific embodiment, a computer program is in the memory 1206 and can run on the processor 1204, when being executed by the processor 1204, the computer program can execute the instructions for the temperature measurement method of the vehicle-mounted charging device of the new energy vehicle described in any of the above embodiments. By way of non-limiting examples, the memory 1206 may include any one or more combination of the following: any type of RAM, any type of ROM, a flash device, a hard disk, an optical disk, and the like. More generally, any memory may use any technique to store information. Further, any memory may provide a volatile or non-volatile retention of information. Further, any memory may represent a stationary or removable component of the computer device 1202. In one case, when the processor 1204 executes associated instructions stored in any memory or combination of the memories, the computer device 1202 may perform any of the operations of the associated instructions. The computer device 1202 also includes one or more driving mechanisms 1208 for interacting with any memory, such as a hard disk driving mechanism, an optical disc driving mechanism and the like.

The computer device 1202 may also include an input/output interface 1210 (I/O) for receiving various inputs (via the input device 1212) and for providing various outputs (via the output device 1214). One specific output mechanism may include a presentation device 1216 and an associated graphical user interface (GUI) 1218. In other embodiments, the input/output interface 1210 (I/O), the input device 1212, and the output device 1214 may also be excluded, as just one computer device in the network. The computer device 1202 may also include one or more network interfaces 1220 for exchanging data with other devices via one or more communication links 1222. One or more communication buses 1224 couple the components described above together.

The communication link 1222 may be implemented in any manner, such as via a local area network, a wide area network (e.g., the Internet), a point-to-point connection and the like, or any combination thereof. The communication link 1222 may include any combination of hardwired links, wireless links, routers, gateway functions, name servers, etc., governed by any protocol or combination of protocols.

The present application is described with reference to flow diagrams and/or block diagrams of the method, the device (system) and the computer program product according to some embodiments of the present disclosure. It should be understood that each flow and/or block in the flow diagrams and/or block diagrams, and the combination of the flows and/or blocks in the flow diagrams and/or block diagrams can be achieved by computer program commands. These computer program commands can be provided to a CPU of a general-purpose computer, a special-purpose computer, an embedded processor or other programmable data processor to produce a machine, so that a device for achieving functions designated in one or more flows in the flow diagrams and/or one or more blocks in the block diagrams can be generated by the command executed by the CPU of the computer or other programmable data processor.

These computer program instructions can also be stored in a computer-readable memory that can guide a computer or other programmable data processor to operate in a specified manner, so that the instruction stored in the computer-readable memory generates a manufactured product including an instruction device which achieves functions designated in one or more flows in the flow diagrams and/or one or more blocks in the block diagrams.

These computer program instructions can also be loaded on a computer or other programmable data processor, on which a series of operation steps are executed to generate processing achieved by the computer or other programmable device, so that the instruction executed on the computer or other programmable device is provided for being configured in the steps of achieving functions designated in one or more flows in the flow diagrams and/or one or more blocks in the block diagrams.

In a typical configuration, the computer device includes one or more processors (CPUs), input / output interfaces, network interfaces, and a memory.

The memory, which may have the form of a volatile memory, a Random-Access Memory (RAM) and/or a nonvolatile memory such as Read-Only Memory (ROM) or a flash RAM, and the like among the computer readable medium. The memory is an example of the computer readable medium.

The computer-readable medium includes permanent and non-permanent, removable and non-removable media, which can realize the information storage in any method or technique. The information can be computer readable instructions, data structures, program modules or other data. An example of the computer storage medium includes, but not limited to, a phase change memory (PRAM), a static random access memory (SRAM), a dynamic random access memory (DRAM), other types of random access memory (RAM), a read-only memory (ROM), an electrically-erasable programmable read-only memory (EEPROM), a flash memory or other memory techniques, a compact disk read only memory (CD-ROM), a digital versatile disc (DVD) or other optical storages, magnetic cassette tapes, disk storage or other magnetic storage device, or any other non-transmission medium, which can be used for the storage of information accessible to a computing device. According to the definitions in the disclosure, the computer readable medium does not include temporary computer readable media (transitory media), such as modulated data signal and carrier wave.

Persons skilled in the art shall understand that, the embodiments of the present disclosure can be provided as a method, a system or a computer program product. Therefore, the embodiments of the present disclosure can adopt the forms of a full hardware example, a full software example, or combination of a software example and a hardware example. Moreover, the embodiments of the present disclosure can adopt the form of a computer program product that is implemented on one or more computer-usable storage medium (including but not limited to a disk memory, a CD-ROM, an optical memory and the like) including computer-usable program codes.

The embodiments of the present disclosure may be described in the general context of computer executable instructions executed by the computer, e.g., the program module. In general, the program module includes a routine, a program, an object, an assembly, a data structure and the like executing a specific task or realizing a specific abstract data type. The embodiments of the present disclosure may also be put into practice in the distributed computing environments where tasks are executed by remote processors connected through a communication network. In the distributed computing environments, the program modules may be located in the local and remote computer storage medium including the storage device.

It should also be understood that in embodiments of the present invention, the term "and/or" is merely an association relationship that describes an associated object, meaning that three relationships may exist. For example, "A" and/or "B" may mean that "A" exists alone, and "A" and "B" exist together and "B" exists alone. In addition, the character "/" in the present disclosure generally indicates that the associated objects are in an "OR" relationship.

## Claims

1. A temperature measurement circuit of a vehicle-mounted charging device of a new energy vehicle, comprising:
a first temperature sensor which is configured to be provided at a positive electrode connection terminal of the vehicle-mounted charging device of the new energy vehicle and to acquire a first analog quantity temperature signal of the positive electrode connection terminal;
a second temperature sensor which is configured to be provided at a negative electrode connection terminal of the vehicle-mounted charging device of the new energy vehicle and to acquire a second analog quantity temperature signal of the negative electrode connection terminal;
a third temperature sensor which is configured to be provided in a housing of the vehicle-mounted charging device of the new energy vehicle and to acquire an analog quantity ambient temperature signal of the vehicle-mounted charging device of the new energy vehicle;
an analog-to-digital conversion module (10) which correspondingly converts the first analog quantity temperature signal, the second analog quantity temperature signal, and the analog quantity ambient temperature signal into a first digital quantity temperature signal, a second digital quantity temperature signal, and a digital quantity ambient temperature signal;
**characterized in that** the temperature measurement circuit further comprises a microcontroller unit (20) configured to correct the first digital quantity temperature signal and the second digital quantity temperature signal according to the digital quantity ambient temperature signal, comprising:
correcting the first digital quantity temperature signal according to the formula *f*(*x*₁)*=x*₁×(1+*τx*₁)/(1+*ax*₁); and correcting the second digital quantity temperature signal according to the formula *f*(*x*₂)=*x*₂×(1+*τx*₂)/(1+*ax*₂);
where *x*₁ denotes the first digital quantity temperature signal, *x*₂ denotes the second digital quantity temperature signal, *f*(*x*₁) denotes the corrected first digital quantity temperature signal, *f*(*x*₂) denotes the corrected second digital quantity temperature signal, *τ* denotes a time constant, *a* denotes a temperature compensation coefficient, and *a* = (*k*₁ × *z*+*b*₁)× *τ +* (*k*₂ × *z*+*b*₂), *k*₁ and *b*₁ respectively denote slope and intercept of a straight line corresponding to the two temperature points when the temperature rises by one degree from the lower limit temperature of a workable ambient temperature of the vehicle-mounted charging device of the new energy vehicle at a specified current, *k*₂ and *b*₂ respectively denote slope and intercept of a straight line corresponding to the two temperature points when the temperature rises by one degree from the upper limit temperature of a workable ambient temperature of the vehicle-mounted charging device of the new energy vehicle at the specified current, and z denotes a digital quantity ambient temperature signal.

2. The temperature measurement circuit of a vehicle-mounted charging device of a new energy vehicle according to claim 1, wherein the analog-to-digital conversion module (10) is integrated into the microcontroller unit (20).

3. The temperature measurement circuit of a vehicle-mounted charging device of a new energy vehicle according to claim 1, wherein the temperature measurement circuit further comprises:
a first bias circuit (31) which is provided on a line between the first temperature sensor (TH1) and the analog-to-digital conversion module (10), is configured to set a common mode voltage of the first temperature sensor (TH1) within the specified voltage range of the first temperature sensor (TH1) and detect whether the first temperature sensor (TH1) has an open fault;
a second bias circuit (32) which is provided on a line between the second temperature sensor (TH2) and the analog-to-digital conversion module (10), is configured to set a common mode voltage of the second temperature sensor (TH2) within the specified voltage range of the second temperature sensor (TH2) and detect whether the second temperature sensor (TH2) has an open fault; preferably wherein
the first bias circuit (31) comprises a first weak pull-up resistor (R6) and a first weak pull-down resistor (R12); one end of the first weak pull-up resistor (R6) is connected to one end of the first temperature sensor (TH1), and the other end of the first weak pull-up resistor (R6) is configured to be connected to a DC power supply; one end of the first weak pull-down resistor (R12) is connected to the other end of the first temperature sensor (TH1), and the other end of the first weak pull-down resistor (R12) is grounded; or
the second bias circuit (32) comprises a second weak pull-up resistor (R13) and a second weak pull-down resistor (R7); one end of the second weak pull-up resistor (R13) is connected to one end of the second temperature sensor (TH2), and the other end of the second weak pull-up resistor (R13) is configured to be connected to a DC power supply; one end of the second weak pull-down resistor (R7) is connected to the other end of the second temperature sensor (TH2), and the other end of the second weak pull-down resistor (R7) is grounded.

4. The temperature measurement circuit of a vehicle-mounted charging device of a new energy vehicle according to claim 3, wherein the temperature measurement circuit further comprises:
a first passive filter (41) which is provided on a line between the first bias circuit (31) and the analog-to-digital conversion module (10), and is configured to suppress aliasing distortion and high-frequency noise in the first analog quantity temperature signal;
a second passive filter (42) which is provided on a line between the second bias circuit (32) and the analog-to-digital conversion module (10), and is configured to suppress aliasing distortion and high-frequency noise in the second analog quantity temperature signal ; preferably wherein
the first passive filter (41) comprises a first first-order RC low-pass filter (R8, C1), a second first-order RC low-pass filter (R10, C5) and a first differential capacitor (C3); the first differential capacitor (C3) is connected across between an output end of the first first-order RC low-pass filter (R8, C1) and an output end of the second first-order RC low-pass filter (R10, C5); an input end of the first first-order RC low-pass filter (R8, C1) and an input end of the second first-order RC (R10, C5) low-pass filter are connected to an output end of the first bias circuit (31); or
the second passive filter (42) comprises a third first-order RC low-pass filter (R9, C2), a fourth first-order RC low-pass filter (R11, C6) and a second differential capacitor (C4); the second differential capacitor (C4) is connected across between an output end of the third first-order RC low-pass filter (R9, C2) and an output end of the fourth first-order RC low-pass filter (R11, C6); an input end of the third first-order RC low-pass filter (R9, C2) and an input end of the fourth first-order RC low-pass filter (R11, C6) are connected to an output end of the second bias circuit (32).

5. The temperature measurement circuit of a vehicle-mounted charging device of a new energy vehicle according to claim 3, wherein the temperature measurement circuit further comprises:
a first electromagnetic interference filter (51) which is provided on a line between the first bias circuit (31) and the first temperature sensor (TH1), and is configured to filter electromagnetic interference in the first analog quantity temperature signal;
a second electromagnetic interference filter (52) which is provided on a line between the second bias circuit (32) and the second temperature sensor (TH2), and is configured to filter electromagnetic interference in the second analog quantity temperature signal ; preferably wherein
the first electromagnetic interference filter (51) comprises a first *π* filter (51a), a first magnetic bead (FB3), a second *π* filter (51b) and a second magnetic bead (FB5); the first *π* filter (51a) and the second *π* filter (51b) are configured to filter the electromagnetic interference at and above a cut-off frequency in the first analog quantity temperature signal; the first magnetic bead (FB3) and the second magnetic bead (FB5) are configured to filter the electromagnetic interference below the cut-off frequency in the first analog quantity temperature signal; an input end of the first *π* filter (51a) is connected to one end of the first temperature sensor (TH1), an output end of the first *π* filter (51a) is connected to one end of the first magnetic bead (FB3), and the other end of the first magnetic bead (FB3) is connected to an input end of the first bias circuit (31); an input end of the second *π* filter (51b) is connected to the other end of the first temperature sensor (TH1), an output end of the second *π* filter (51b) is connected to one end of the second magnetic bead (FB5), and the other end of the second magnetic bead (FB5) is connected to the input end of the first bias circuit (31);
or
the second electromagnetic interference filter (52) comprises a third *π* filter (52a), a third magnetic bead (FB2), a fourth *π* filter (52b) and a fourth magnetic bead (FB8); the third *π* filter (52a) and the fourth *π* filter (52b) are configured to filter the electromagnetic interference at and above a cut-off frequency in the second analog quantity temperature signal; the third magnetic bead (FB2) and the fourth magnetic bead (FB8) are configured to filter the electromagnetic interference below the cut-off frequency in the second analog quantity temperature signal; an input end of the third *π* filter (52a) is connected to one end of the second temperature sensor (TH2), an output end of the third *π* filter (52a) is connected to one end of the third magnetic bead (FB2), and the other end of the third magnetic bead (FB2) is connected to an input end of the second bias circuit (32); an input end of the fourth *π* filter (52b) is connected to the other end of the second temperature sensor (TH2), an output end of the fourth *π* filter (52b) is connected to one end of the fourth magnetic bead (FB8), and the other end of the fourth magnetic bead (FB8) is connected to the input end of the second bias circuit (32).

6. The temperature measurement circuit of a vehicle-mounted charging device of a new energy vehicle according to claim 1, wherein one end of the third temperature sensor (TH3) is configured to be connected to a DC power supply through a pull-up resistor (R4), and a connection point between the third temperature sensor (TH3) and the pull-up resistor (R4) serves as an output end of the third temperature sensor (TH3), and the other end of the third temperature sensor (TH3) is grounded.

7. The temperature measurement circuit of a vehicle-mounted charging device of a new energy vehicle according to claim 1, wherein the temperature measurement circuit further comprises:
a matching network (60) which is provided on a line between the analog-to-digital conversion module (10) and the microcontroller unit (20) and is configured to perform current limiting control and impedance matching control of the first digital quantity temperature signal and the second digital quantity temperature signal; wherein the current limiting control is configured to make current values of the first digital quantity temperature signal and the second digital quantity temperature signal within an allowable range of the microcontroller unit (20), and the impedance matching control is configured to completely transmit the first digital quantity temperature signal and the second digital quantity temperature signal to the microcontroller unit (20).

8. The temperature measurement circuit of a vehicle-mounted charging device of a new energy vehicle according to claim 1, wherein the first temperature sensor (TH1), the second temperature sensor (TH2) or the third temperature sensor (TH3) is a thermocouple or a thermal resistor; preferably wherein
the thermal resistor is an NTC thermistor or a PTC thermistor.

9. A vehicle-mounted charging device of a new energy vehicle, wherein the vehicle-mounted charging device of the new energy vehicle is configured with the temperature measurement circuit according to any of claims 1 to 8; preferably wherein
the vehicle-mounted charging device of the new energy vehicle comprises a new energy vehicle-mounted charging socket.

10. A new energy vehicle, wherein the new energy vehicle is configured with the vehicle-mounted charging device of the new energy vehicle according to claim 9.

11. A computer-implemented temperature measurement method of a vehicle-mounted charging device of a new energy vehicle, wherein comprising:
acquiring a first analog quantity temperature signal of a positive electrode connection terminal, a second analog quantity temperature signal of a negative electrode connection terminal, and an analog quantity ambient temperature signal of the vehicle-mounted charging device of the new energy vehicle;
correspondingly converting the first analog quantity temperature signal, the second analog quantity temperature signal, and the analog quantity ambient temperature signal into a first digital quantity temperature signal, a second digital quantity temperature signal, and a digital quantity ambient temperature signal;
**characterized in that**, the mehod further comprises correcting the first digital quantity temperature signal and the second digital quantity temperature signal according to the digital quantity ambient temperature signal, comprsing
correcting the first digital quantity temperature signal according to the formula *f*(*x*₁)=*x*₁×(1*+τx*₁)/(1+*ax*₁); and correcting the second digital quantity temperature signal according to the formula *f*(*x*₂)*=x*₂×(1+*τx*₂)/(1+*ax*₂);
where *x*₁ denotes the first digital quantity temperature signal, *x*₂ denotes the second digital quantity temperature signal, *f*(*x*₁) denotes the corrected first digital quantity temperature signal, *f*(*x*₂) denotes the corrected second digital quantity temperature signal, *τ* denotes a time constant, *a* denotes a temperature compensation coefficient, and *a =* (*k*₁ × *z*+*b*₁)×*τ +* (*k*₂ × *z*+*b*₂)*, k*₁ and *b*₁ respectively denote slope and intercept of a straight line corresponding to the two temperature points when the temperature rises by one degree from the lower limit temperature of a workable ambient temperature of the vehicle-mounted charging device of the new energy vehicle at a specified current, *k*₂ and *b*₂ respectively denote slope and intercept of a straight line corresponding to the two temperature points when the temperature rises by one degree from the upper limit temperature of a workable ambient temperature of the vehicle-mounted charging device of the new energy vehicle at the specified current, and z denotes a digital quantity ambient temperature signal.

12. A computer device comprising a memory (1206), a processor (1204) and a computer program stored in the memory (1206), wherein the computer program, when being run by the processor (1204), executes instructions of the method according to claim 11.

13. A computer storage medium storing a computer program therein, wherein the computer program, when being run by the processor (1204) of the computer device (1202), executes instructions of the method according to claim 11.

## Patentansprüche

1. Temperaturmessschaltung einer fahrzeugmontierten Ladevorrichtung eines Neue-Energie-Fahrzeugs, aufweisend:
einen ersten Temperatursensor, der so konfiguriert ist, dass er an einem Pluspolanschluss der fahrzeugmontierten Ladevorrichtung des Neue-Energie-Fahrzeugs vorgesehen ist und ein erstes analoges Temperatursignal des Pluspolanschlusses erfasst;
einen zweiten Temperatursensor, der so konfiguriert ist, dass er an einem Minuspolanschluss der fahrzeugmontierten Ladevorrichtung des Neue-Energie-Fahrzeugs vorgesehen ist und ein zweites analoges Temperatursignal des Minuspolanschlusses erfasst;
einen dritten Temperatursensor, der so konfiguriert ist, dass er in einem Gehäuse der fahrzeugmontierten Ladevorrichtung des Neue-Energie-Fahrzeugs vorgesehen ist und ein analoges Umgebungstemperatursignal der fahrzeugmontierten Ladevorrichtung des Neue-Energie-Fahrzeugs erfasst;
ein Analog-Digital-Wandlermodul (10), das das erste analoge Temperatursignal, das zweite analoge Temperatursignal und das analoge Umgebungstemperatursignal entsprechend in ein erstes digitales Temperatursignal, ein zweites digitales Temperatursignal und ein digitales Umgebungstemperatursignal umwandelt;
**dadurch gekennzeichnet, dass** die Temperaturmessschaltung ferner eine Mikrocontroller-Einheit (20) aufweist, die so konfiguriert ist, dass sie das erste digitale Temperatursignal und das zweite digitale Temperatursignal entsprechend dem digitalen Umgebungstemperatursignal korrigiert, aufweisend:
Korrigieren des ersten digitalen Temperatursignals gemäß der Formel *f*(*x*₁) *=x*₁×(1+*τx*₁)/(1*+ax*₁)*;* und Korrigieren des zweiten digitalen Temperatursignals gemäß der Formel *f*(*x*₂)*=x*₂×(1+*τx*₂)/(1*+ax*₂);
wobei *x*₁ das erste digitale Temperatursignal bezeichnet, *x*₂ das zweite digitale Temperatursignal bezeichnet, *f*(*x*₁) das korrigierte erste digitale Temperatursignal bezeichnet, *f*(*x*₂) das korrigierte zweite digitale Temperatursignal bezeichnet, *τ* eine Zeitkonstante bezeichnet, *a* einen Temperaturkompensationskoeffizienten bezeichnet und *a =* (*k*₁ × *z+b*₁)× *τ* + (*k*₂ × *z+b*₂) , *k*₁ und *b*₁ jeweils die Steigung und den Schnittpunkt einer Geraden bezeichnen, die den beiden Temperaturpunkten entspricht, wenn die Temperatur bei einem bestimmten Strom um ein Grad von der Untergrenze der betriebsfähigen Umgebungstemperatur der fahrzeugmontierten Ladevorrichtung des Neue-Energie-Fahrzeugs ansteigt, wobei *k*₂ und *b*₂ jeweils die Steigung und den Schnittpunkt einer Geraden bezeichnen, die den beiden Temperaturpunkten entspricht, wenn die Temperatur um ein Grad von der Obergrenze der betriebsfähigen Umgebungstemperatur der fahrzeugmontierten Ladevorrichtung des Neue-Energie-Fahrzeugs bei dem festgelegten Strom ansteigt, und z ein digitales Umgebungstemperatursignal bezeichnet.

2. Temperaturmessschaltung einer fahrzeugmontierten Ladevorrichtung eines Neue-Energie-Fahrzeugs gemäß Anspruch 1, bei der das Analog-Digital-Wandlermodul (10) in die Mikrocontroller-Einheit (20) integriert ist.

3. Temperaturmessschaltung einer fahrzeugmontierten Ladevorrichtung eines Neue-Energie-Fahrzeugs gemäß Anspruch 1, bei der die Temperaturmessschaltung des Weiteren aufweist:
eine erste Vorspannungsschaltung (31), die auf einer Leitung zwischen dem ersten Temperatursensor (TH1) und dem Analog-Digital-Wandlermodul (10) vorgesehen ist und so konfiguriert ist, dass sie eine Gleichtaktspannung des ersten Temperatursensors (TH1) innerhalb des vorgegebenen Spannungsbereichs des ersten Temperatursensors (TH1) einstellt und erkennt, ob der erste Temperatursensor (TH1) einen offenen Fehler aufweist;
eine zweite Vorspannungsschaltung (32), die auf einer Leitung zwischen dem zweiten Temperatursensor (TH2) und dem Analog-Digital-Wandlermodul (10) vorgesehen ist und so konfiguriert ist, dass sie eine Gleichtaktspannung des zweiten Temperatursensors (TH2) innerhalb des festgelegten Spannungsbereichs des zweiten Temperatursensors (TH2) einstellt und erkennt, ob der zweite Temperatursensor (TH2) einen offenen Fehler aufweist; vorzugsweise bei der
die erste Vorspannungsschaltung (31) einen ersten schwachen Pull-up-Widerstand (R6) und einen ersten schwachen Pull-down-Widerstand (R12) aufweist; ein Ende des ersten schwachen Pull-up-Widerstands (R6) mit einem Ende des ersten Temperatursensors (TH1) verbunden ist und das andere Ende des ersten schwachen Pull-up-Widerstands (R6) so konfiguriert ist, dass es mit einer Gleichstromversorgung verbunden ist; ein Ende des ersten schwachen Pull-Down-Widerstands (R12) mit dem anderen Ende des ersten Temperatursensors (TH1) verbunden ist, und das andere Ende des ersten schwachen Pull-Down-Widerstands (R12) geerdet ist; oder
die zweite Vorspannungsschaltung (32) einen zweiten schwachen Pull-up-Widerstand (R13) und einen zweiten schwachen Pull-down-Widerstand (R7) aufweist; ein Ende des zweiten schwachen Pull-up-Widerstands (R13) mit einem Ende des zweiten Temperatursensors (TH2) verbunden ist, und das andere Ende des zweiten schwachen Pull-up-Widerstands (R13) so konfiguriert ist, dass es mit einer Gleichstromversorgung verbunden ist; ein Ende des zweiten schwachen Pull-Down-Widerstands (R7) mit dem anderen Ende des zweiten Temperatursensors (TH2) verbunden ist und das andere Ende des zweiten schwachen Pull-Down-Widerstands (R7) geerdet ist.

4. Temperaturmessschaltung einer fahrzeugmontierten Ladevorrichtung eines Neue-Energie-Fahrzeugs gemäß Anspruch 3, bei der die Temperaturmessschaltung des Weiteren aufweist:
einen ersten passiven Filter (41), der auf einer Leitung zwischen der ersten Vorspannungsschaltung (31) und dem Analog-Digital-Wandlermodul (10) vorgesehen ist und so konfiguriert ist, dass er Aliasing-Verzerrungen und hochfrequente Störgeräusche im ersten analogen Temperatursignal unterdrückt;
einen zweiten passiven Filter (42), der auf einer Leitung zwischen der zweiten Vorspannungsschaltung (32) und dem Analog-Digital-Wandlermodul (10) vorgesehen ist und so konfiguriert ist, dass er Aliasing-Verzerrungen und hochfrequentes Rauschen im zweiten analogen Temperatursignal unterdrückt; bei der vorzugsweise
der erste passive Filter (41) einen ersten RC-Tiefpassfilter erster Ordnung (R8, C1), einen zweiten RC-Tiefpassfilter erster Ordnung (R10, C5) und einen ersten Differenzkondensator (C3) aufweist; der erste Differenzkondensator (C3) zwischen einem Ausgangsende des ersten RC-Tiefpassfilters erster Ordnung (R8, C1) und einem Ausgangsende des zweiten RC-Tiefpassfilters erster Ordnung (R10, C5) angeschlossen ist; ein Eingangsende des ersten RC-Tiefpassfilters erster Ordnung (R8, C1) und ein Eingangsende des zweiten RC-Tiefpassfilters erster Ordnung (R10, C5) mit einem Ausgangsende der ersten Vorspannungsschaltung (31) verbunden sind; oder
der zweite passive Filter (42) einen dritten RC-Tiefpassfilter erster Ordnung (R9, C2), einen vierten RC-Tiefpassfilter erster Ordnung (R11, C6) und einen zweiten Differenzkondensator (C4) aufweist; der zweite Differenzkondensator (C4) zwischen einem Ausgangsende des dritten Tiefpassfilters erster Ordnung (R9, C2) und einem Ausgangsende des vierten Tiefpassfilters erster Ordnung (R11, C6) angeschlossen ist; ein Eingangsende des dritten RC-Tiefpassfilters erster Ordnung (R9, C2) und ein Eingangsende des vierten RC-Tiefpassfilters erster Ordnung (R11, C6) mit einem Ausgangsende der zweiten Vorspannungsschaltung (32) verbunden sind.

5. Temperaturmessschaltung einer fahrzeugmontierten Ladevorrichtung eines Neue-Energie-Fahrzeugs gemäß Anspruch 3, bei der die Temperaturmessschaltung des Weiteren aufweist:
einen ersten elektromagnetischen Interferenzfilter (51), der auf einer Leitung zwischen der ersten Vorspannungsschaltung (31) und dem ersten Temperatursensor (TH1) vorgesehen und so konfiguriert ist, dass er elektromagnetische Interferenzen im ersten analogen Temperatursignal filtert;
einen zweiten elektromagnetischen Interferenzfilter (52), der auf einer Leitung zwischen der zweiten Vorspannungsschaltung (32) und dem zweiten Temperatursensor (TH2) vorgesehen und so konfiguriert ist, dass er elektromagnetische Interferenzen im zweiten analogen Temperatursignal filtert; bei der vorzugsweise
der erste elektromagnetische Interferenzfilter (51) einen ersten *π*-Filter (51a), eine erste Magnetperle (FB3), einen zweiten *π*-Filter (51b) und eine zweite Magnetperle (FB5) aufweist; der erste *π*-Filter (51a) und der zweite *π*-Filter (51b) so konfiguriert sind, dass sie die elektromagnetischen Störungen bei und oberhalb einer Grenzfrequenz im ersten analogen Temperatursignal filtern; die erste Magnetperle (FB3) und die zweite Magnetperle (FB5) so konfiguriert sind, dass sie die elektromagnetischen Störungen unterhalb der Grenzfrequenz im ersten analogen Temperatursignal filtern; ein Eingangsende des ersten *π*-Filters (51a) mit einem Ende des ersten Temperatursensors (TH1) verbunden ist, ein Ausgangsende des ersten *π*-Filters (51a) mit einem Ende der ersten Magnetperle (FB3) verbunden ist, und das andere Ende der ersten Magnetperle (FB3) mit einem Eingangsende der ersten Vorspannungsschaltung (31) verbunden ist; ein Eingangsende des zweiten *π*-Filters (51b) mit dem anderen Ende des ersten Temperatursensors (TH1) verbunden ist, ein Ausgangsende des zweiten *π*-Filters (51b) mit einem Ende der zweiten Magnetperle (FB5) verbunden ist, und das andere Ende der zweiten Magnetperle (FB5) mit dem Eingangsende der ersten Vorspannungsschaltung (31) verbunden ist;
oder
der zweite elektromagnetische Interferenzfilter (52) einen dritten *π*-Filter (52a), eine dritte Magnetperle (FB2), einen vierten *π*-Filter (52b) und eine vierte Magnetperle (FB8) aufweist; der dritte *π*-Filter (52a) und der vierte *π*-Filter (52b) so konfiguriert sind, dass sie die elektromagnetischen Störungen bei und oberhalb einer Grenzfrequenz im zweiten analogen Temperatursignal filtern; die dritte Magnetperle (FB2) und die vierte Magnetperle (FB8) so konfiguriert sind, dass sie die elektromagnetischen Störungen unterhalb der Grenzfrequenz im zweiten analogen Temperatursignal filtern; ein Eingangsende des dritten *π*-Filters (52a) mit einem Ende des zweiten Temperatursensors (TH2) verbunden ist, ein Ausgangsende des dritten *π*-Filters (52a) mit einem Ende der dritten Magnetperle (FB2) verbunden ist, und das andere Ende der dritten Magnetperle (FB2) mit einem Eingangsende der zweiten Vorspannungsschaltung (32) verbunden ist; ein Eingangsende des vierten *π-*Filters (52b) mit dem anderen Ende des zweiten Temperatursensors (TH2) verbunden ist, ein Ausgangsende des vierten *π*-Filters (52b) mit einem Ende der vierten Magnetperle (FB8) verbunden ist und das andere Ende der vierten Magnetperle (FB8) mit dem Eingangsende der zweiten Vorspannungsschaltung (32) verbunden ist.

6. Temperaturmessschaltung einer fahrzeugmontierten Ladevorrichtung eines Neue-Energie-Fahrzeugs gemäß Anspruch 1, bei der ein Ende des dritten Temperatursensors (TH3) so konfiguriert ist, dass es über einen Pull-up-Widerstand (R4) mit einer Gleichstromversorgung verbunden ist, und ein Verbindungspunkt zwischen dem dritten Temperatursensor (TH3) und dem Pull-up-Widerstand (R4) als Ausgangsende des dritten Temperatursensors (TH3) dient, und das andere Ende des dritten Temperatursensors (TH3) geerdet ist.

7. Temperaturmessschaltung einer fahrzeugmontierten Ladevorrichtung eines Neue-Energie-Fahrzeugs gemäß Anspruch 1, bei der die Temperaturmessschaltung des Weiteren aufweist:
ein Anpassungsnetzwerk (60), das auf einer Leitung zwischen dem Analog-Digital-Wandlermodul (10) und der Mikrocontroller-Einheit (20) vorgesehen ist und so konfiguriert ist, dass es eine Strombegrenzungssteuerung und eine Impedanzanpassungssteuerung des ersten digitalen Temperatursignals und des zweiten digitalen Temperatursignals durchführt; wobei die Strombegrenzungssteuerung so konfiguriert ist, dass sie die Stromwerte des ersten digitalen Temperatursignals und des zweiten digitalen Temperatursignals innerhalb eines zulässigen Bereichs der Mikrocontroller-Einheit (20) hält, und die Impedanzanpassungssteuerung so konfiguriert ist, dass sie das erste digitale Temperatursignal und das zweite digitale Temperatursignal vollständig an die Mikrocontroller-Einheit (20) überträgt.

8. Temperaturmessschaltung einer fahrzeugmontierten Ladevorrichtung eines Neue-Energie-Fahrzeugs gemäß Anspruch 1, bei der der erste Temperatursensor (TH1), der zweite Temperatursensor (TH2) oder der dritte Temperatursensor (TH3) ein Thermoelement oder ein Thermowiderstand ist; vorzugsweise bei der
der Thermowiderstand ein NTC-Thermistor oder ein PTC-Thermistor ist.

9. Fahrzeugmontierte Ladevorrichtung eines Neue-Energie-Fahrzeugs, bei der die fahrzeugmontierte Ladevorrichtung des Neue-Energie-Fahrzeugs mit der Temperaturmessschaltung gemäß einem der Ansprüche 1 bis 8 konfiguriert ist; vorzugsweise bei der
die fahrzeugmontierte Ladevorrichtung des Neue-Energie-Fahrzeugs eine fahrzeugmontierte Ladebuchse für Neue-Energie-Fahrzeuge aufweist.

10. Neue-Energie-Fahrzeug, bei der das Neue-Energie-Fahrzeug mit der fahrzeugmontierten Ladevorrichtung des Neue-Energie-Fahrzeugs gemäß Anspruch 9 konfiguriert ist.

11. Computergestütztes Verfahren zur Temperaturmessung einer fahrzeugmontierten Ladevorrichtung eines Neue-Energie-Fahrzeugs, aufweisend:
Erfassen eines ersten analogen Temperatursignals eines Pluspolanschlusses, eines zweiten analogen Temperatursignals eines Minuspolanschlusses und eines analogen Umgebungstemperatursignals der fahrzeugmontierten Ladevorrichtung des Neue-Energie-Fahrzeugs;
entsprechendes Umwandeln des ersten analogen Temperatursignals, des zweiten analogen Temperatursignals und des analogen Umgebungstemperatursignals in ein erstes digitales Temperatursignal, ein zweites digitales Temperatursignal und ein digitales Umgebungstemperatursignal;
**dadurch gekennzeichnet, dass** das Verfahren des Weiteren das Korrigieren des ersten digitalen Temperatursignals und des zweiten digitalen Temperatursignals gemäß dem digitalen Umgebungstemperatursignal aufweist, aufweisend:
Korrigieren des ersten digitalen Temperatursignals gemäß der Formel *f*(*x*₁) *=x*₁×(1+*τx*₁)/(1+*ax*₁) ; und Korrektur des zweiten digitalen Temperatursignals gemäß der Formel *f*(*x*₂)=*x*₂×(1+*τx*₂)/(1+*ax*₂);
wobei *x*₁ das erste digitale Temperatursignal, *x*₂ das zweite digitale Temperatursignal, *f*(*x*₁) das korrigierte erste digitale Temperatursignal, *f*(*x*₂) das korrigierte zweite digitale Temperatursignal, *τ* eine Zeitkonstante, *a* einen Temperaturkompensationskoeffizienten und *a =* (*k*₁ × *z*+*b*₁)×*τ +* (*k*₂ × *z+b*₂), *k*₁ und *b*₁ jeweils die Steigung und den Schnittpunkt einer Geraden bezeichnen, die den beiden Temperaturpunkten entspricht, wenn die Temperatur bei einem bestimmten Strom um ein Grad von der Untergrenze der betriebsfähigen Umgebungstemperatur der fahrzeugmontierten Ladevorrichtung des Neue-Energie-Fahrzeugs ansteigt, wobei *k*₂ und *b*₂ jeweils die Steigung und den Schnittpunkt einer Geraden bezeichnen, die den beiden Temperaturpunkten entspricht, wenn die Temperatur um ein Grad von der Obergrenze der betriebsfähigen Umgebungstemperatur der fahrzeugmontierten Ladevorrichtung des Neue-Energie-Fahrzeugs bei dem festgelegten Strom ansteigt, und z ein digitales Umgebungstemperatursignal bezeichnet.

12. Computervorrichtung mit einem Speicher (1206), einem Prozessor (1204) und einem im Speicher (1206) gespeicherten Computerprogramm, wobei das Computerprogramm, wenn es vom Prozessor (1204) ausgeführt wird, Anweisungen des Verfahrens gemäß Anspruch 11 ausführt.

13. Computerspeichermedium, das ein Computerprogramm speichert, wobei das Computerprogramm, wenn es vom Prozessor (1204) der Computervorrichtung (1202) ausgeführt wird, Anweisungen des Verfahrens gemäß Anspruch 11 ausführt.

## Revendications

1. Circuit de mesure de température d'un dispositif de charge monté sur un véhicule à nouveau énergie, comprenant :
un premier capteur de température configuré pour être prévu sur une borne positive du dispositif de charge monté sur véhicule du véhicule à nouveau énergie et pour détecter un premier signal de température analogique de la borne positive;
un deuxième capteur de température configuré pour être prévu sur une borne négative du dispositif de charge monté sur le véhicule à nouveau énergie et pour détecter un deuxième signal de température analogique de la borne négative;
un troisième capteur de température configuré pour être prévu dans un boîtier du dispositif de charge monté sur le véhicule à nouveau énergie et pour détecter un signal de température ambiante analogique du dispositif de charge monté sur le véhicule à nouveau énergie;
un module convertisseur analogique-numérique (10) qui convertit le premier signal de température analogique, le deuxième signal de température analogique et le signal de température ambiante analogique en un premier signal de température numérique, un deuxième signal de température numérique et un signal de température ambiante numérique, respectivement;
**caractérisé en ce que** le circuit de mesure de température comprend en outre une unité de microcontrôleur (20) configurée pour corriger le premier signal de température numérique et le deuxième signal de température numérique en fonction du signal de température ambiante numérique, comprenant:
la correction du premier signal numérique de température selon la formule *f*(*x*₁)=*x*₁×(1+*τx*₁)/(1+ *ax*₁)*;* et la correction du deuxième signal numérique de température selon la formule *f*(*x*₂)*=x*₂×(1+*τx*₂)/(1*+ax*₂);
où *x*₁ désigne le premier signal numérique de température, *x*₂ désigne le deuxième signal numérique de température, *f*(*x*₁) désigne le premier signal numérique de température corrigé, *f*(*x*₂) désigne le deuxième signal numérique de température corrigé, *τ* désigne une constante de temps, a désigne un coefficient de compensation de température et *a =* (*k*₁ × *z+b*₁)×*τ* + (*k*₂ × *z*+*b*₂), *k*₁ et *b*₁ désignent respectivement la pente et le point d'intersection d'une droite qui correspond aux deux points de température lorsque la température augmente d'un degré à partir de la limite inférieure de la température ambiante de fonctionnement du dispositif de charge monté sur le véhicule à nouveau énergie pour un courant donné, *k*₂ et *b*₂ désignant respectivement la pente et le point d'intersection d'une droite correspondant aux deux points de température lorsque la température augmente d'un degré par rapport à la limite supérieure de la température ambiante de fonctionnement du dispositif de charge monté sur le véhicule à nouveau énergie pour le courant spécifié, et z désignant un signal numérique de température ambiante.

2. Circuit de mesure de température d'un dispositif de charge monté sur un véhicule à nouveau énergie selon la revendication 1, dans lequel le module convertisseur analogique-numérique (10) est intégré dans l'unité de microcontrôleur (20).

3. Circuit de mesure de température d'un dispositif de charge monté sur un véhicule à nouveau énergie selon la revendication 1, dans lequel le circuit de mesure de température comprend en outre:
un premier circuit de polarisation (31) qui est prévu sur une ligne entre le premier capteur de température (TH1) et le module convertisseur analogique-numérique (10) et qui est configuré pour régler une tension de mode commun du premier capteur de température (TH1) dans la plage de tension prédéterminée du premier capteur de température (TH1) et pour détecter si le premier capteur de température (TH1) présente un défaut d'ouverture;
un deuxième circuit de polarisation (32) prévu sur une ligne entre le deuxième capteur de température (TH2) et le module convertisseur analogique-numérique (10) et configuré pour régler une tension de mode commun du deuxième capteur de température (TH2) dans la plage de tension spécifiée du deuxième capteur de température (TH2) et pour détecter si le deuxième capteur de température (TH2) présente un défaut d'ouverture; de préférence, dans le
le premier circuit de polarisation (31) comprend une première résistance de pull-up faible (R6) et une première résistance de pull-down faible (R12); une extrémité de la première résistance de pull-up faible (R6) est connectée à une extrémité du premier capteur de température (TH1) et l'autre extrémité de la première résistance de pull-up faible (R6) est configurée pour être connectée à une alimentation en courant continu; une extrémité de la première résistance pull-down faible (R12) est connectée à l'autre extrémité du premier capteur de température (TH1), et l'autre extrémité de la première résistance pull-down faible (R12) est mise à la terre; ou
le deuxième circuit de polarisation (32) comprend une deuxième résistance pull-up faible (R13) et une deuxième résistance pull-down faible (R7); une extrémité de la deuxième résistance pull-up faible (R13) est connectée à une extrémité du deuxième capteur de température (TH2), et l'autre extrémité de la deuxième résistance pull-up faible (R13) est configurée pour être connectée à une alimentation en courant continu; une extrémité de la deuxième résistance pull-down faible (R7) est connectée à l'autre extrémité du deuxième capteur de température (TH2) et l'autre extrémité de la deuxième résistance pull-down faible (R7) est mise à la terre.

4. Circuit de mesure de température d'un dispositif de charge monté sur un véhicule à nouveau énergie selon la revendication 3, dans lequel le circuit de mesure de température comprend en outre:
un premier filtre passif (41) prévu sur une ligne entre le premier circuit de polarisation (31) et le module convertisseur analogique-numérique (10) et configuré pour supprimer les distorsions d'aliasing et les bruits parasites à haute fréquence dans le premier signal de température analogique;
un deuxième filtre passif (42) prévu sur une ligne entre le deuxième circuit de polarisation (32) et le module convertisseur analogique-numérique (10) et configuré de manière à supprimer les distorsions d'aliasing et les bruits à haute fréquence dans le deuxième signal de température analogique; dans lequel, de préférence
le premier filtre passif (41) comprend un premier filtre passe-bas RC du premier ordre (R8, C1), un deuxième filtre passe-bas RC du premier ordre (R10, C5) et un premier condensateur différentiel (C3); le premier condensateur différentiel (C3) est connecté entre une extrémité de sortie du premier filtre passe-bas RC du premier ordre (R8, C1) et une extrémité de sortie du deuxième filtre passe-bas RC du premier ordre (R10, C5); une extrémité d'entrée du premier filtre passe-bas RC du premier ordre (R8, C1) et une extrémité d'entrée du deuxième filtre passe-bas RC du premier ordre (R10, C5) sont connectées à une extrémité de sortie du premier circuit de polarisation (31); ou
le deuxième filtre passif (42) comprend un troisième filtre passe-bas RC du premier ordre (R9, C2), un quatrième filtre passe-bas RC du premier ordre (R11, C6) et un deuxième condensateur différentiel (C4); le deuxième condensateur différentiel (C4) est connecté entre une extrémité de sortie du troisième filtre passe-bas du premier ordre (R9, C2) et une extrémité de sortie du quatrième filtre passe-bas du premier ordre (R11, C6); une extrémité d'entrée du troisième filtre passe-bas RC du premier ordre (R9, C2) et une extrémité d'entrée du quatrième filtre passe-bas RC du premier ordre (R11, C6) sont connectées à une extrémité de sortie du deuxième circuit de polarisation (32).

5. Circuit de mesure de température d'un dispositif de charge monté sur un véhicule à nouveau énergie selon la revendication 3, dans lequel le circuit de mesure de température comprend en outre :
un premier filtre d'interférence électromagnétique (51) prévu sur une ligne entre le premier circuit de polarisation (31) et le premier capteur de température (TH1) et configuré pour filtrer les interférences électromagnétiques dans le premier signal de température analogique;
un deuxième filtre d'interférences électromagnétiques (52) prévu sur une ligne entre le deuxième circuit de polarisation (32) et le deuxième capteur de température (TH2) et configuré de manière à filtrer les interférences électromagnétiques dans le deuxième signal de température analogique ; dans lequel, de préférence
le premier filtre d'interférences électromagnétiques (51) comprend un premier *π*-filtre (51a), une première perle magnétique (FB3), un deuxième *π*-filtre (51b) et une deuxième perle magnétique (FB5); le premier *π*-filtre (51a) et le deuxième *π*-filtre (51b) sont configurés de manière à filtrer les interférences électromagnétiques à une fréquence limite et au-dessus de celle-ci dans le premier signal de température analogique; la première perle magnétique (FB3) et la deuxième perle magnétique (FB5) sont configurées de manière à filtrer les perturbations électromagnétiques en dessous de la fréquence limite dans le premier signal de température analogique; une extrémité d'entrée du premier *π*-filtre (51a) est connectée à une extrémité du premier capteur de température (TH1), une extrémité de sortie du premier *π*-filtre (51a) est connectée à une extrémité de la première perle magnétique (FB3), et l'autre extrémité de la première perle magnétique (FB3) est connectée à une extrémité d'entrée du premier circuit de polarisation (31); une extrémité d'entrée du deuxième *π*-filtre (51b) est connectée à l'autre extrémité du premier capteur de température (TH1), une extrémité de sortie du deuxième *π*-filtre (51b) est connectée à une extrémité de la deuxième perle magnétique (FB5), et l'autre extrémité de la deuxième perle magnétique (FB5) est connectée à l'extrémité d'entrée du premier circuit de polarisation (31);
ou
le deuxième filtre d'interférences électromagnétiques (52) comprend un troisième *π-*filtre (52a), une troisième perle magnétique (FB2), un quatrième *π*-filtre (52b) et une quatrième perle magnétique (FB8); le troisième *π*-filtre (52a) et le quatrième *π*-filtre (52b) sont configurés pour filtrer les interférences électromagnétiques à une fréquence limite et au-dessus de celle-ci dans le deuxième signal de température analogique; la troisième perle magnétique (FB2) et la quatrième perle magnétique (FB8) sont configurées de manière à filtrer les interférences électromagnétiques en dessous de la fréquence limite dans le deuxième signal de température analogique; une extrémité d'entrée du troisième *π*-filtre (52a) est connectée à une extrémité du deuxième capteur de température (TH2), une extrémité de sortie du troisième *π*-filtre (52a) est connectée à une extrémité de la troisième perle magnétique (FB2), et l'autre extrémité de la troisième perle magnétique (FB2) est connectée à une extrémité d'entrée du deuxième circuit de polarisation (32); une extrémité d'entrée du quatrième *π*-filtre (52b) est connectée à l'autre extrémité du deuxième capteur de température (TH2), une extrémité de sortie du quatrième *π*-filtre (52b) est connectée à une extrémité de la quatrième perle magnétique (FB8) et l'autre extrémité de la quatrième perle magnétique (FB8) est connectée à l'extrémité d'entrée du deuxième circuit de polarisation (32).

6. Circuit de mesure de température d'un dispositif de charge monté sur un véhicule à nouveau énergie selon la revendication 1, dans lequel une extrémité du troisième capteur de température (TH3) est configurée de manière à être connectée à une alimentation en courant continu via une résistance pull-up (R4), et un point de connexion entre le troisième capteur de température (TH3) et la résistance pull-up (R4) sert d'extrémité de sortie du troisième capteur de température (TH3), et l'autre extrémité du troisième capteur de température (TH3) est mise à la terre.

7. Circuit de mesure de température d'un dispositif de charge monté sur un véhicule à nouveau énergie selon la revendication 1, dans lequel le circuit de mesure de température comprend en outre:
un réseau d'adaptation (60) prévu sur une ligne entre le module convertisseur analogique-numérique (10) et l'unité de microcontrôleur (20) et configuré pour effectuer une commande de limitation de courant et une commande d'adaptation d'impédance du premier signal de température numérique et du deuxième signal de température numérique; la commande de limitation de courant étant configurée pour maintenir les valeurs de courant du premier signal de température numérique et du deuxième signal de température numérique dans une plage admissible de l'unité de microcontrôleur (20), et la commande d'adaptation d'impédance étant configurée pour transmettre complètement le premier signal de température numérique et le deuxième signal de température numérique à l'unité de microcontrôleur (20).

8. Circuit de mesure de température d'un dispositif de charge monté sur un véhicule à nouveau énergie selon la revendication 1, dans lequel le premier capteur de température (TH1), le deuxième capteur de température (TH2) ou le troisième capteur de température (TH3) est un thermocouple ou une thermorésistance; de préférence, dans lequel
la thermorésistance est une thermistance NTC ou une thermistance PTC.

9. Dispositif de charge monté sur un véhicule à nouveau énergie, dans lequel le dispositif de charge monté sur le véhicule à nouveau énergie est configuré avec le circuit de mesure de température selon l'une des revendications 1 à 8; de préférence, dans lequel
le dispositif de charge monté sur véhicule du véhicule à nouveau énergie comprend une prise de charge montée sur véhicule pour véhicules à nouveau énergie.

10. Véhicule à nouveau énergie, dans lequel le véhicule à nouveau énergie est configuré avec le dispositif de charge monté sur un véhicule à nouveau énergie selon la revendication 9.

11. Procédé assisté par ordinateur pour mesurer la température d'un dispositif de charge monté sur un véhicule à nouveau énergie, comprenant:
l'acquisition d'un premier signal de température analogique d'une borne positive, d'un deuxième signal de température analogique d'une borne négative et d'un signal de température ambiante analogique du dispositif de charge monté sur véhicule du véhicule à nouveau énergie;
la conversion correspondante du premier signal de température analogique, du deuxième signal de température analogique et du signal de température ambiante analogique en un premier signal de température numérique, un deuxième signal de température numérique et un signal de température ambiante numérique;
**caractérisé en ce que** le procédé comprend en outre la correction du premier signal de température numérique et du deuxième signal de température numérique en fonction du signal de température ambiante numérique, comprenant:
la correction du premier signal numérique de température selon la formule *f*(*x*₁)*=x*₁×(1+*τx*₁)/(1+*ax*₁) ; et Correction du deuxième signal numérique de température selon la formule *f*(*x*₂)*=x*₂×(1+*τx*₂)/(1+*ax*₂) ;
où *x*₁ désigne le premier signal numérique de température, *x*₂ désigne le deuxième signal numérique de température, *f*(*x*₁) désigne le premier signal numérique de température corrigé, *f*(*x*₂) désigne le deuxième signal numérique de température corrigé, *τ* désigne une constante de temps, *a* désigne un coefficient de compensation de température et *a =* (*k*₁ × *z+b*₁)×*τ* + (*k*₂ × *z*+*b*₂), *k*₁ et *b*₁ désignent respectivement la pente et le point d'intersection d'une droite qui correspond aux deux points de température lorsque la température augmente d'un degré à partir de la limite inférieure de la température ambiante de fonctionnement du dispositif de charge monté sur le véhicule à nouveau énergie pour un courant donné, *k*₂ et *b*₂ désignant respectivement la pente et le point d'intersection d'une droite correspondant aux deux points de température lorsque la température augmente d'un degré par rapport à la limite supérieure de la température ambiante de fonctionnement du dispositif de charge monté sur le véhicule à nouveau énergie pour le courant spécifié, et z désignant un signal numérique de température ambiante.

12. Dispositif informatique comprenant une mémoire (1206), un processeur (1204) et un programme informatique stocké dans la mémoire (1206), le programme informatique, lorsqu'il est exécuté par le processeur (1204), exécutant les instructions du procédé selon la revendication 11.

13. Support de stockage informatique stockant un programme informatique, dans lequel le programme informatique, lorsqu'il est exécuté par le processeur (1204) du dispositif informatique (1202), exécute les instructions du procédé selon la revendication 11.
